(19) Europäisches Patentamt / European Patent Office / Office européen des brevets

(11) **EP 2 717 016 B1**

(12) **EUROPEAN PATENT SPECIFICATION**

(45) Date of publication and mention
of the grant of the patent:
**20.05.2020   Bulletin 2020/21**

(51) Int Cl.:
**G01C 21/34** *(2006.01)*      **B60L 53/14** *(2019.01)*
**B60L 53/30** *(2019.01)*

(21) Application number: **12187451.5**

(22) Date of filing: **05.10.2012**

(54) **Method and system for providing route assistance for electric vehicles**

Verfahren und System für das Bereitstellen einer Fahrtunterstützung für Elektrofahrzeuge

Procédé et système permettant de fournir une assistance de route pour véhicules électriques

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.04.2014   Bulletin 2014/15**

(73) Proprietor: **HITACHI, LTD.**
**Chiyoda-ku**
**Tokyo 100-8280 (JP)**

(72) Inventor: **Mariyasagayam, Marie Nestor**
**06600 Antibes (FR)**

(74) Representative: **MERH-IP Matias Erny Reichl
Hoffmann
Patentanwälte PartG mbB
Paul-Heyse-Strasse 29
80336 München (DE)**

(56) References cited:
**WO-A1-2011/102515      WO-A1-2012/056530
WO-A1-2013/024484      US-A1- 2009 082 957
US-A1- 2012 098 676**

**Description**

The present invention relates to a method and a system for providing route assistance for electric vehicles.

**Background**

In the prior art, providing route assistance services for electric vehicles is generally performed independently for each electrical vehicle, taking into account a navigation route from a start location to a destination location being traveled by the respective electric vehicle based on shortest distances towards available charging stations for charging power supply units of electric vehicles (such as electric vehicle batteries) while the electric vehicle is travelling along the navigation route.

For example, US 2011/0224900 A1 shows a route planning system for planning a navigation route of one electric vehicle by calculating waypoints along the route and searching for charging stations around the route so as to identify charging stations near a minimum-cost route from a current position of the electric vehicle to the destination location. Another prior art document, US 2011/0257879 A1, shows a route guidance method for electric vehicles, where route guidance is provided for one electric vehicle by selecting a navigation route which is estimated to consume the least amount of electric power by taking into account the road gradient on the navigation route towards the destination location. Route plans are changed only when the power-level of the electric vehicle's battery is not sufficient enough to reach the destination. According to the above, route planning for electric vehicles is performed in the prior art for each electric vehicle independently and based on the shortest distance to the charging stations or by selecting routes that consume a least amount of electric power.

However, in the prior art, because route planning for electric vehicles is performed in the prior art for each electric vehicle independently, there is not taken into account information on other electric vehicle and route planning for other electric vehicles, e.g. in case plural electric vehicles are planned or scheduled to use the same charging station, nor the power capacity levels of charging stations is considered. That is, there may occur a problem that when a large number of electric vehicles is planned or scheduled to charge at same charging station, and if route planning and route guidance for the electric vehicles is provided independently and without considering other electric vehicles and other charging station options, some users of the electric vehicles may suffer due to problems as follows.

When the number of electric vehicles increases on a certain route or road portion, the probability for an electric vehicle to find a free spot for charging at a particular charging station along the route may decrease significantly, and the users may suffer long queuing times (waiting times) at the charging station, when all charging spots at the charging station are occupied. Moreover, with increasing number of electric vehicles in a perimeter of a charging station, there is a high likelihood for a charging station to become overloaded due to the increasing demand for charging from the increasing number of electric vehicles along the route.

Specifically, in case a charging station becomes overloaded due to high electric vehicle charging demand in terms of higher number of electric vehicles to be charged and/or in terms of higher electric power usage due to higher number of electric vehicles, users/drivers of electric vehicles may encounter one or more of the following problems. Firstly, a user/driver of an electric vehicle may be required to wait in order to get charged due to queuing of electric vehicles at the charging station, which ultimately may leads to a significant delay in the driver's journey to the destination. Secondly, increased charging demand at one charging station may lead to a situation in which subsequent charging stations along the route may slowly become overloaded because users/drivers tend stop for charging at the subsequent stations, when charging is not possible in a previous charging station.

This may then additionally lead to overdrawing of electric power from the charging stations in an area, which might eventually even lead to a shortage of power in that particular area. As a result, a user/driver of an electric vehicle may not find any suitable charging station at all for a considerable length of the intended route due to a power shortage in the area. Thirdly, it might further happen that the costs for charging per unit of electric power can become higher when the charging station proposes to charge electric vehicles using their stand-by power during times of overloading and power shortage. As a result of the above problems, providing route assistance for electric vehicles may become risky for reaching the intended destination.

In view of the above, it is desirable to enable safer, smarter and more reliable route assistance to users/drivers of electric vehicles, in particular under risky conditions of charging, and especially when charging stations are susceptible to overloading and it is further desirable to aim at preventing charging stations from becoming overloaded due to continuous electric vehicle charging.

For the above reasons, it is an object of the present invention to provide more safe, more smart and more reliable route assistance for electric vehicles and more reliable charging assistance for electric vehicles and charging stations.

US 2012/098676 A1 relates to an information providing system for providing a passenger with information includes an in-vehicle device installed in an electric vehicle, wherein the passenger is provided with the information via the in-vehicle device. The in-vehicle device includes a notifier for notifying the passenger of a congested state of a charge station candidate. The notifying is implemented by estimating of the congested state of the charge station candidate at a time point when an own electric vehicle reaches the charge station candidate which is a charge station reachable with a state-of-charge of the own electric vehicle, and the estimating is implemented based on: position information and the state-of-charge of the own electric vehicle, and position information and a state-of-charge of another electric vehicle which is present around the charge station candidate.

**Summary**

In view of the above objects, there is proposed a method for providing route assistance for electric vehicles according to claim 1 and a system for providing route assistance for electric vehicles according to claim 14. Dependent claims relate to some of the preferred embodiments.

According to an aspect, there is proposed a method for providing route assistance for electric vehicles which comprises providing electric vehicle data for a plurality of electric vehicles, the electric vehicle data being indicative of respective locations and travel directions of the plurality of electric vehicles, and providing charging station data for a plurality of charging stations indicative of respective locations of a plurality of charging stations for electric vehicles.

The method may further comprise deciding, whether to re-route one or more electric vehicles towards other charging stations as intended on the basis of the provided electric vehicle data for a plurality of electric vehicles and the provided charging station data. If it is decided that one or more electric vehicles shall be re-routed, updated navigation route data may be provided to the electric vehicles indicating updated route information taking into account the decided re-routing.

Specifically, the method may comprise identifying, for one or more first electric vehicles, a first charging station being approached by the one or more first electric vehicles based on the charging station data and the electric vehicle data, or identifying, for the first charging station, one or more first electric vehicles approaching the first charging station, and it may then be decided, whether to re-route one or more first electric vehicles currently approaching the first charging station towards one or more other charging stations, in particular by providing updated navigation data to the electric vehicle(s) to be re-routed, on the basis of the electric vehicle data for a plurality of electric vehicles and the charging station data.

The underlying idea of the above aspect is that the decision to re-route one or more electric vehicles is not performed independently for the respective electric vehicles based on charging station data and electric vehicle data on a single electric vehicle which is the target of the decision, but electric vehicle data of other electric vehicles is advantageously taken into account so that a decision to re-route one or more re-route one or more first electric vehicles currently approaching the same charging station towards one or more other charging stations can be based on collective electric vehicle data on plural electric vehicles and can, therefore, be performed in a coordinate and/or synchronized manner for plural electric vehicles approaching the same charging station.

This aspect advantageously allows to efficiently reduce queuing times at the charging station, avoiding overload occurring at the charging station and reducing the risk of a power shortage due to overloading at the charging station in the area of the charging station under the mutual consideration of other electric vehicles in the decision of whether to re-route one or more electric vehicles.

In the above aspect, particularly for the step of identifying, the one or more first electric vehicles may be electric vehicles that approach the first charging station from one or more directions, and each first electric vehicle may be scheduled for charging at the first charging station according to an intended route itinerary for the respective first electric vehicle, or the user/driver of a first electric vehicle may have made an input of information indicating the first charging station as intended charging station. Also, it is possible that a user/driver of a first electric vehicle may have made an input of information indicating the first charging station as intended charging station

According to preferred aspects, the deciding, whether to re-route one or more first electric vehicles, may be based on the electric vehicle data for the one or more first electric vehicles approaching the first charging station, the electric vehicle data for one or more second electric vehicles (which may not approach the first charging station, or may approach the charging station and be scheduled for charging at the first charging station or not be scheduled for charging at the first charging station) and the charging station data. Alternatively, or in addition, the deciding, whether to re-route one or more first electric vehicles, may be based on the electric vehicle data for a plurality of first electric vehicles approaching the first charging station and preferably being scheduled for charging at the first charging station and the charging station data.

According to a preferred aspect, the method may further comprise determining, for one or more first electric vehicles, a risk parameter being indicative of an estimate of likelihood of occupancy at the first charging station upon arrival of the respective first electric vehicle preferably based on the electric vehicle data and/or the charging station data, wherein the deciding, whether to re-route one or more first electric vehicles, is preferably based on the determined risk parameters.

This preferred aspect has the advantage that is possible to assist route selection by associating a risk parameter (risk factor) for charging at a charging station along a planned route of a first electric vehicle. The risk parameter (risk factor) may be regularly determined or be even continuously monitored, and when a risk parameter (risk factor) being associated with a first vehicle becomes larger, this may advantageously indicate that the possibility to charge for the first electric vehicle at a particular first charging station along the route becomes less, and a decision whether to re-route based on one or more further criteria may be initiated or it may already be determined to decide re-routing of the associated first electric vehicle. For example, a new route based on other subsequent charging stations may then be selected and proposed to the user/driver of the first electric vehicle. As a result, an enhanced and even more reliable electric vehicle route assistance for drivers/users of electric vehicles can be advantageously achieved.

In addition, when determining or even monitoring risk parameters (risk factors) for plural first electric vehicles, according to further preferred aspects, it is advantageously possible to use the information for determining/predicting charging stations that are susceptible to overload by monitoring the risk factors, e.g. if plural first vehicles approaching the first charging station have increased associated risk parameters (risk factors). It is then advantageously possible, by re-routing one or more of these first electric vehicles over less-loaded charging stations, to prevent specific charging stations from becoming overloaded. Accordingly, a further optimization and improvement of load management at a charging station during periods of high charging demand can be achieved.

According to the above preferred aspects, which propose to determine one or more risk parameters (risk factors) is to determine associated risk parameters (risk factors) for charging at a specific first charging station along the travel route. The risk parameters (risk factors) may be preferably calculated based on one or more of the load (output power capacity) of the next charging station, one or more time-to-reach factors of first electric vehicles (indicative of a travel time to or an arrival time at the first charging station) with respect to one or more time-to-reach factors of other electric vehicles, and the total number of electric vehicles in a perimeter of the first charging station, the number of electric vehicles approaching the first charging station, or even a ratio of the number of electric vehicles travelling towards the first charging station and the total number of electric vehicles within the perimeter of the first charging station.

The risk parameters (risk factors) associated with the first charging station may be continuously monitored, and when the risk parameter (risk factor) for a certain first electric vehicle exceeds a pre- determined threshold value, a suitable alternative route towards another charging station can re-calculated and advised to the user/driver of the certain first electric vehicle. Also, if the number of first electric vehicles for which the respective risk parameter (risk factor) exceeds the threshold value becomes larger (e.g. the number exceeds a second threshold value), one or more of these risky first electric vehicles for which the respective risk parameter (risk factor) exceeds the threshold value can be decided to be re-routed to one or more other charging stations for avoiding overloading of the first charging station.

In accordance with the above, according to further preferred aspects, the method may further comprise determining, for each determined risk parameter, whether the respective risk parameter exceeds a threshold value; wherein the deciding, whether to re-route one or more first electric vehicles, is preferably based on a number of first electric vehicles for which the respective risk parameter exceeds the threshold value, and/or wherein the deciding, whether to reroute a certain first electric vehicle, is preferably based on whether the risk parameter determined for the certain first electric vehicle exceeds the threshold value.

In the above aspect, it is for example possible to initiate a decision, whether to re-route a certain first electric vehicle, based on one or more further criteria when the associated risk parameter of the certain first electric vehicle exceeds a first threshold value, and when plural first electric vehicles have an associated risk parameter exceeding the first threshold value, e.g. when the number of first electric vehicles having an associated risk parameter exceeding the first threshold value exceeds a second threshold value, one or more of those first electric vehicles having an associated risk parameter exceeding the first threshold value are automatically decided to be re-routed, e.g. without checking further criteria.

In accordance with the above, the method may, according to another preferred aspect, further comprise determining, for each determined risk parameter, whether the respective risk parameter exceeds a threshold value; determining a number of first electric vehicles for which the respective risk parameter exceeds the threshold value for the first charging station; and determining that the first charging station is overloaded if the number of first electric vehicles for which the respective risk parameter exceeds the threshold value for the first charging station exceeds a second threshold value.

This has the advantage that it can be reliably and efficiently monitored in a convenient and simple manner whether one or more charging stations are to be considered overloaded based on monitoring of risk parameters associated with plural electric vehicles.

It is to be noted that the above preferred aspect of monitoring risk factors and determining whether one of more charging stations are overloaded can be also proposed as an independent aspect, in particular independent of whether to perform a decision to re-route or not.

Accordingly, there may be provided another aspect according to a method for providing route assistance for electric vehicles, comprising:

- providing electric vehicle data for a plurality of electric vehicles, the electric vehicle data being indicative of respective locations and travel directions of the plurality of electric vehicles;
- providing charging station data for a plurality of charging stations indicative of respective locations of a plurality of charging stations for electric vehicles;
- identifying, for one or more first electric vehicles, a first charging station being approached by the one or more first electric vehicles based on the charging station data and the electric vehicle data, or identifying, for the first charging station, one or more first electric vehicles approaching the first charging station;
- determining, for each first electric vehicle, a risk parameter indicative of an estimate of likelihood of occupancy at the first charging station upon arrival of the respective first electric vehicle;
- determining, for each determined risk parameter, whether the respective risk parameter exceeds a threshold value;
- determining a number of first electric vehicles for which the respective risk parameter exceeds the threshold value for the first charging station; and
- determining, whether the first charging station is overloaded, based on if the number of first electric vehicles for which the respective risk parameter exceeds the threshold value for the first charging station exceeds a second threshold value.

In the above aspects, when it is determined that one or more first charging stations are overloaded based on the monitoring of plural risk parameters (risk factors), one or more electric vehicles approaching the first charging station(s) are re-routed to other charging stations.

In addition or alternatively, the method may preferably further comprise requesting electric power distribution for distributing, by means of an electric power station supplying a plurality of charging stations with electric power, more electric power to the one or more charging stations which have been determined to be overloaded. In particular, a power distribution managing electric power station supplying a plurality of charging stations with electric power may be requested, upon determination that one or more charging stations supplied by the electric power station, to re-distribute electric power such that less electric power is distributed to one or more charging stations that are not determined to be overloaded and more electric power is distributed to the one or more charging stations that are determined to be overloaded.

Preferably, in the calculation of the above-mentioned risk parameter(s) in any of the above aspects, a respective risk parameter for a certain first electric vehicle is preferably determined based on a parameter being indicative of a comparison of an estimated travel time of the respective first vehicle to the first charging station and estimated travel times of other electric vehicles travelling to the first charging station, wherein the risk factor preferably increases when an increasing number of the estimated travel times of other electric vehicles is shorter than the estimated travel time of the respective first vehicle to the first charging station.

In addition or alternatively, the determination of the risk parameter may be further based on a number of currently occupied charging spots at the first charging station indicated in the charging station data (the risk parameter preferably increasing with increasing number of currently occupied charging spots at the first charging station).

In addition or alternatively, the determination of the risk parameter may be further based on a total number of charging spots at the first charging station in the charging station data (the risk parameter preferably decreasing with increasing number of total number of charging spots at the first charging station.

In addition or alternatively, the determination of the risk parameter may be further based on the risk parameter preferably increasing with decreasing difference between the total number of charging spots and the number of currently occupied charging spots at the first charging station).

In addition or alternatively, the determination of the risk parameter may be further based on a number of electric vehicles located in a perimeter of the first charging station, and/or a number of electric vehicles located in the perimeter of the first charging station and travelling in the direction of the first charging station (the risk parameter preferably increasing with increasing number electric vehicles located in the perimeter of the first charging station and travelling in the direction of the first charging station).

According to a further preferred aspect, the method may further comprise determining, based on the charging station data for the first charging station, a perimeter region for the first charging station, the first charging station being located in the perimeter region, in particular being centrally located in the perimeter region, and/or determining, based on the electric vehicle data for the plural electric vehicles, which of the plurality of electric vehicles are located in the perimeter region and travelling towards the first charging station. Preferably, the deciding, whether to re-route one or more first electric vehicles, is then based on electric vehicle data for electric vehicles located in the perimeter region and travelling towards the first charging station among plural electric vehicles.

Preferably, the deciding, whether to re-route one or more first electric vehicles, is based on a number of the one or more electric vehicles located in the perimeter region and travelling towards the first charging station or is based on a ratio of the number of electric vehicles located in the perimeter region and travelling towards the first charging station and a number of electric vehicles located in the perimeter region.

According to an aspect, the method comprises estimating, for one or more electric vehicles travelling towards the first charging station, an estimated travel time parameter indicative of an estimated travel time of the respective electric vehicle to the first charging station, wherein the deciding, whether to re-route one or more first electric vehicles, is based on the one or more estimated travel time parameters.

The deciding, whether to re-route one certain first electric vehicle, is based on a comparison of the estimated travel time parameter determined for the certain first electric vehicle with a mean value of estimated travel time parameters. This has the advantage that it may be indicated more reliably whether it is likely that the certain first electric vehicle will likely arrive later than or earlier than a majority of the other vehicles.

It is to be noted that the estimation of estimated travel time parameters indicative of estimated travel times of the respective electric vehicles to the first charging station mentioned above may be performed on the basis of a simple model using information on current or average vehicle speed and current distance to the first charging station, however, in order to further improve reliability of the route assistance for electric vehicles, the estimation of estimated travel time parameters indicative of estimated travel times of the respective electric vehicles to the first charging station is performed by additionally taking into account traffic conditions e.g. by being further based on statistical traffic information and/or real-time traffic information.

This is especially effective and more reliable for scenarios in which plural electric vehicles are approaching the first charging station from different direction along different roads/routes having different traffic conditions, because it may happen that an electrical vehicle being closer to the first charging station may actually require a higher travel time but being stuck in heavy traffic conditions such as a traffic jam may be likely to arrive later than another more distant electric vehicle which approaches the same first charging station on another road which does have free traffic conditions.

In particular, in the above, the comparison of the estimated travel time parameter determined for the certain first electric vehicle with a mean value of estimated travel time parameters is preferably performed on the basis of an auxiliary parameter being determined according to a function of the estimated travel time parameter determined for the certain first electric vehicle and the mean value of estimated travel time parameters or even a function of the estimated travel time parameter determined for the certain first electric vehicle, the mean value of estimated travel time parameters, and a standard deviation of estimated travel time parameters. By taking into account a standard deviation in the above comparison, it may be more reliably estimated how reliable the estimates actually are and which fraction/number of other vehicles is likely to arrive later or earlier than the certain first electric vehicle.

According to a further preferred aspect, the method may further comprise estimating a number of electric vehicles expected to arrive at the first charging station earlier than one certain first electric vehicle based on a comparison of the estimated travel time parameter determined for the certain first electric vehicle and estimated travel time parameters determined for other electric vehicles travelling towards the first charging station, wherein said deciding, whether to re-route the certain first electric vehicle towards the second charging station, is preferably based on the determined number of second vehicles expected to arrive at the first charging station earlier than the certain first electric vehicle.

According to a further preferred aspect, the charging station data for the first charging station may be indicative of at least two of a total number of charging spots at the first charging station, a number of currently available charging spots at the first charging station, and a number of currently occupied charging spots at the first charging station. Note that any two parameters of the above allow to easily calculate the remaining third parameter, if needed, so providing data indicating all three of the above parameters is redundant data but may still be added to the charging station data for reducing processing burden at a deciding means (processing means) making the decision whether to re-route.

In the above aspect, if at least one charging spot is occupied at the first charging station, the charging station data for the first charging station is preferably further indicative of an expected remaining charging duration for each currently occupied charging spot.

Preferably, the method then may further comprise estimating, for a certain first electric vehicle, a number of available charging spots at the time of arrival of the certain first electric vehicle at the first charging station based on the number of currently available charging spots and the number of currently occupied charging spots for which the expected remaining charging duration is smaller or equal to an estimated time of arrival of the certain first electric vehicle at the first charging station or estimating, for a certain first electric vehicle, whether there are any available charging spots at the time of arrival of the certain first electric vehicle at the first charging station based on the number of currently available charging spots and the number of currently occupied charging spots for which the expected remaining charging duration is smaller or equal to an estimated time of arrival of the certain first electric vehicle at the first charging station, and wherein the deciding, whether to re-route the certain first electric vehicle, is preferably based further on the estimated number of available charging spots at the time of arrival of the certain first electric vehicle at the first charging station or on the estimate whether there are any available charging spots at the time of arrival of the certain first electric vehicle at the first charging station.

Preferably, the estimating of the number of available charging spots at the time of arrival of the certain first electric vehicle at the first charging station or the estimating, whether there are any available charging spots at the time of arrival of the certain first electric vehicle at the first charging station is further based on the number of electric vehicles for which the respective estimated arrival time at the first charging station is earlier than the estimated arrival time of the certain first electric vehicle at the first charging station.

According to another preferred aspect, the method may further comprise determining, for each currently occupied charging spot for which an estimated travel time of a certain first electric vehicle to the first charging station is shorter than the respective expected remaining charging duration, a respective liberation time based on the respective expected remaining charging duration, and determining an expected minimal queuing time based on a minimal value of the determined liberation times (or expected remaining charging durations) and the estimated travel time of the certain first electric vehicle to the first charging station, wherein said deciding, whether to re-route the certain first electric vehicle, is based on the expected minimal queuing time.

Further preferably, the method may further comprise estimating, based on the electric vehicle data for the certain first electric vehicle, the charging station data for the first charging station and the charging station data for a second charging station, a first estimated travel time parameter indicative of an estimated travel time of the certain first electric vehicle to the first charging station and a second estimated travel time parameter indicative of an estimated travel time of the certain first electric vehicle to the second charging station.

Then, further preferably, the deciding, whether to re-route the certain first electric vehicle towards the second charging station, is based on a comparison of the estimated travel time of the first electric vehicle to the second charging station and the sum of the estimated travel time of the first electric vehicle to the first charging station and the expected minimal queuing time at the first charging station.

Preferably, the charging station data for the first charging station is indicative of two of a total number of charging spots at the first charging station, a number of currently available charging spots at the first charging station, and a number of currently occupied charging spots at the first charging station, wherein the deciding, whether to re-route the first electric vehicle towards the second charging station, is preferably based on a ratio of the number of currently occupied charging spots at the first charging station and the total number of charging spots at the first charging station.

According to another aspect, there is proposed a system, e.g. a server system of one or more computer servers, for providing route assistance for electric vehicles, in particular according to at least one of the above aspects. The system may be rendered also as being an apparatus, e.g. comprising one or more server computers.

The system may comprise data providing means for providing electric vehicle data for a plurality of electric vehicles, the electric vehicle data being indicative of respective locations and travel directions of the plurality of electric vehicles, and for providing charging station data for a plurality of charging stations indicative of respective locations of a plurality of charging stations for electric vehicles.

Here, a data providing means may comprise one or more of a receiving means for receiving the respective data from other entities such as from one or more of mobile devices, server computers, databases, and/or service providers, sending means for sending the respective data to other entities such as to one or more of mobile devices, server computers, databases and/or service providers, download provision means for downloading the respective data or providing the respective data for download, storage means for storing the respective data, and processing means for creating the respective data based on other data obtained via any of receiving means, storage means or download provision means.

Furthermore, the system may further comprise data processing means for identifying, for one or more first electric vehicles, a first charging station being approached by the one or more first electric vehicles based on the charging station data and the electric vehicle data, or identifying, for the first charging station, one or more first electric vehicles approaching the first charging station; and for deciding, whether to re-route one or more first electric vehicles towards one or more other charging stations, in particular by providing updated navigation data by means of the data providing means, on the basis of the electric vehicle data for a plurality of electric vehicles and the charging station data.

According to another aspect, there may be proposed a computer program product comprising computer program means being configured to cause a server system comprising one or more server computers to execute the steps of the method according to at least one of the above-described aspects.

Summarizing the above, there can be provided aspects according to the above which enable to provide safer, smarter and more reliable route assistance to users/drivers of electric vehicles, in particular under risky conditions of charging, and especially when charging stations are susceptible to overloading and it is further desirable to aim at preventing charging stations from becoming overloaded due to continuous electric vehicle charging. It advantageously is possible by the above aspects to provide more safe, more smart and more reliable route assistance for electric vehicles and more reliable charging assistance for electric vehicles and charging stations.

**Brief description of drawings**

Fig. 1        illustrates an exemplary system architecture of a system for providing route assistance for electric vehicles according to an embodiment of the present invention.

Fig. 2          illustrates an exemplary system architecture of a user-side device.

Fig. 3          illustrates an exemplary schematic view of an apparatus for providing route assistance for electric vehicles according to an embodiment of the present invention.

Fig. 4          illustrates an exemplary schematic view of a mobile apparatus for providing route assistance for electric vehicles according to an embodiment of the present invention.

Fig. 5          illustrates an exemplary flowchart of a method for providing route assistance from a server side.

Fig. 6          illustrates an exemplary flowchart of a method for providing route assistance for electric vehicles according to an embodiment of the present invention, specifically for performing a decision to re-route on the basis of a determined risk factor.

Fig. 7          illustrates an exemplary flowchart of a method for estimating a population of electric vehicles in a perimeter of a charging station in the method of Fig. 6.

Fig. 8          illustrates an exemplary flowchart of a method for calculating an auxiliary time-to- reach-factor in the method of Fig. 6.

Fig. 9          illustrates an exemplary look-up table used for calculating an auxiliary time-to-reach-factor in the method of Fig. 8.

Fig. 10         illustrates an exemplary flowchart of a method for estimating a number of available charging spots at a charging station and for determining one or more liberations times and an expected minimal queuing time.

Fig. 11         illustrates an exemplary flowchart of a method for checking plural criteria in a decision, whether to re-route a certain electric vehicle, according to an embodiment of the present invention.

Fig. 12         illustrates an exemplary flowchart of a method for initiating route assistance for electric vehicles on a user side.

Fig. 13         illustrates an exemplary flowchart of a method for handling route assistance for electric vehicles on a user side.

Fig. 14         illustrates an exemplary flowchart of a method for providing route assistance for electric vehicles according to an embodiment of the present invention, specifically for determining whether a certain charging station is overloaded and performing re-routing accordingly.

Fig. 15         illustrates an exemplary flowchart of a method for providing route assistance for electric vehicles according to an embodiment of the present invention, specifically for determining whether charging stations are overloaded and performing power management in a smart electric power grid accordingly.

Figs. 16A to 16C    illustrate an example of deciding re-routing of a certain electric vehicle according to the embodiment of Fig. 6.

Fig. 17         illustrates an example of a first embodiment of providing route assistance for electric vehicles, comprising re-routing one certain electric vehicle according to an aspect of the invention.

Fig. 18         illustrates an example of a second embodiment of providing route assistance for electric vehicles, comprising re-routing of one or more electric vehicles according to an aspect of the invention.

Fig. 19         illustrates an example of a third embodiment of providing route assistance for electric vehicles, comprising re-distributing electric power capacity among plural charging stations on the basis of monitoring overloading of charging stations.

**Detailed description of drawings and preferred embodiments of the present invention**

Preferred embodiments of the present invention will be described below with reference to the accompanying figures. The described features and aspects of the embodiments may be modified or combined to form further embodiments of the present invention.

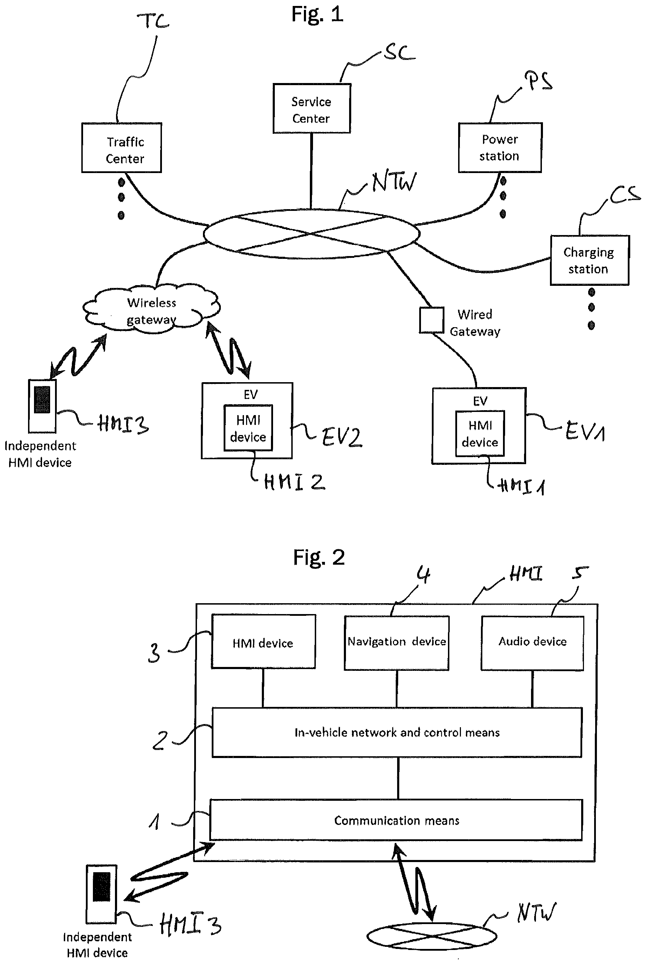

Fig. 1 illustrates an exemplary system architecture of a system for providing route assistance for electric vehicles according to an embodiment of the present invention. The system comprises one or more traffic centers TC, one or more power stations PS, and one or more charging stations CS for charging of electric vehicles, the charging stations CS being supplied with electric powers by the one or more power stations PS.

Each of the one or more traffic centers TC, one or more power stations PS, and one or more charging stations CS for charging of electric vehicles is communicably connected via a communication network such, as the Internet, with a service center SC for providing route assistance for electric vehicles. The service center SC may comprise one or more connected server computers and databases and is configured to provide route assistance for electric vehicles according to an embodiment of the present invention. The server computers and databases of the service center SC may be located inside one single service center at a localized location or they may be placed at different geographic locations and may be connected via a communication network such as the communication network NTW or other networks such as Ethernet, LAN, etc.

For the service provision purposes, the service center SC is further configured to be communicably connected, via the communication network NTW and via wired or wireless gateways as shown in with one or more electric vehicles EV1 and EV2 and one or more independent Human-Machine-Interface (HMI) devices HMI3 of users of electric vehicles, in particular independent HMI devices HMI3 of users of electric vehicles which are detachably communicably connectable with a control unit of the electric vehicle of the user.

As shown in Fig. 1, the electric vehicles EV1 and EV2 are exemplarily equipped with mounted HMI devices HMI1 and HMI2. Alternatively or in addition, independent HMI devices of users of the electric vehicles EV1 and EV2 which are detachably communicably connectable with a control unit of the electric vehicles can be used for the route guidance purposes.

The service center SC is configured to communicate via the communication network NTW with the one or more traffic centers TC, the one or more power stations PS, the one or more charging stations and the one or more electric vehicles EV1 and EV2 and/or independent HMI devices HMI3, and the service center SC is configured to exchange data with the one or more traffic centers TC, the one or more power stations PS, the one or more charging stations and the one or more electric vehicles EV1 and EV2 and/or independent HMI devices HMI3 through the communication network NTW.

The service center SC may store location information indicating locations of the charging stations CS pre-loaded into a memory means or a database or the location information on locations of charging stations may be received, automatically or upon request, from directly from charging stations or from a charging station service provider providing services in connection with one or more charging stations, such as e.g. reservation services. Charging station data may therefore be pre-stored at the service center SC and/or received (upon request or automatically on a regular basis) from charging stations and/or charging station service providers.

Furthermore, the service center SC is configured to receive traffic data (including statistical and/or real-time traffic data) from the traffic center(s) TC for monitoring traffic conditions on roads of a road network on which electric vehicles communicably connected with the service center SC are traveling.

The traffic center(s) TC, charging stations (CS) and/or charging station providers may provide the service center SC also with updated charging station data including new information about existing charging stations and potential additions of new charging stations.

Charging station data received at the service center SC may not only indicate locations of the charging stations but may include further information such as characteristics information on the charging stations such as total number of charging spots at a certain charging station having one or more charging spots for electric vehicles (one single charging spot being configured to charge one single electric vehicle at a time), number of currently occupied charging spots at the charging station (i.e. charging spots currently being occupied due to charging of an electric vehicle) and/or number of currently available charging spots at the charging station (i.e. charging spots currently being available due to being free for being connected to an electric vehicle battery for charging). The charging station data may further indicate power charging rates at currently charging spots and information such as charging target power level and current target power level for estimating remaining charging durations at currently occupied spots based on the indicated power charging rates. The charging station data may also directly indicate information on a remaining duration of charging for currently occupied spots. In addition, charging station data may indicate cost rates for charging at the respective charging stations.

As mentioned above, a charging station is a facility for electric vehicles to re-charge their batteries (power supply units). The charging station may contain one or more charging spots where one spot is used by one vehicle to charge. The charging station or charging station provider provides data information to the service center SC server(s) via the communication network NTW about the current charging conditions such as maximum number of charging spots, currently occupied spots, rate at which charging is happening at a charging spot, EV battery level, EV battery capacity or the intended level of charging at the charging spot.

Regarding the vehicle side, the HMI devices used for the route assistance at the user side (a user being e.g. a driver of an electric vehicle or a passenger of an electric vehicle) can be mounted to the vehicles such as devices HMI1 and HMI2 are equipped in the vehicles EV1 and EV2, respectively, or HMI devices can be realized by independent HMI devices (e.g. mobile navigation devices, smart phones, tablet computers, notebooks etc.) such as device HMI3 in Fig. 1. The HMI devices HMI1 to HMI3 are configured to communicate with the service center SC server(s) through the communication network NTW (such as e.g. the Internet), when the device is connected to the network, indirectly or directly, i.e. via wireless media (e.g. via vehicular networks, via cellular connections such as UMTS or LTE etc., or via WIFI), or via wired media such as Ethernet or a power line carrier.

The traffic center TC is a system that may be owned by road operators or traffic information service providers, and is configured to manage road traffic related information collected e.g. from roadside sensors and/or other vehicles through communication networks such as vehicular networks. The traffic center TC may be capable of providing the road traffic related information to the service center SC server(s) through the communication network NTW.

The traffic related information may include collection of localization data, speed, direction of travel, estimated travelling time between geographic locations, and/or location of charging stations. In addition, information about the location, presence and travelling direction of electric vehicles along the route or in the road network and/or status of their battery charges can also be provided by the traffic center TC to the service center SC server(s). In addition or alternatively, information about the location, presence and travelling direction of electric vehicles along the route or in the road network and/or status of their battery charges can also be provided by the electric vehicles themselves. For one or more electric vehicles, the service center SC server(s) may receive navigation data indicating navigation route information indicating a route being travelled by the electric vehicles to their destination (e.g. including information on waypoints of the travel route, locations of charging stations being passed by the vehicle along the route, or even charging station information indicating a certain charging station along the route that is scheduled to charge the electric vehicle).

The power station PS is a source (such as a power plant) and/or power distributor of electric power supply, e.g. for distributing electric power in a electric power smart grid. The power station PS supplies one or more charging stations with electric power and is configured to dynamically re-distribute electric power among the charging stations based on demand, e.g. by providing more electric power to overloaded charging stations. Information on charging stations that are connected to and supplied by the power station PS can be sent from the power station PS to the service center SC server(s).

Also information about overloading of charging stations can be sent periodically or on demand from the service center SC server(s) to the power stations. This information can be used by the power station PS to allocate needed power and thus prevent eventual grid collapse due to overdrawing of power at a particular section.

Fig. 2 illustrates an exemplary system architecture of a user-side device as may be mounted on an electric vehicle. The device has a communication means 1 for communicating communicably connecting via the communication network NTW and/or an independent HMI device HMI3. The device further comprises an In-vehicle network and control means 2 for connecting an HMI device 3, a navigation device 4 and an audio device 5. The HMI device 3 may be provided in addition or alternatively to a connected independent HMI device HMI3.

The HMI device 3 is configured to act as an Interface to the user/driver for operating or control telematics devices, such as e.g. the navigation device 4 and/or the audio device 5. The HMI device 3 is configured to obtain travel information input from the user/driver via the in-vehicle network and control means, and also can communicate with the outside of the vehicle, for example with the service center SC server(s), through the communication means 1 and the network NTW to which the communication means 1 (and/or the independent HMI device HMI3) is communicably connected.

As mentioned above, the HMI device 3 (and also the navigation device 4) may not necessarily be directly equipped in the vehicle, and the independent HMI device HMI3 can be connected to the vehicle via wired or wireless means and thus can also support the user/driver and passengers to access vehicle-related services such as route assistance according to the embodiments. For example, a PND (Portable Navigation Device), a mobile smart phone, a mobile computer such as a notebook or a tablet computer may also be capable of providing the navigation services.

The audio device 5 provides means for recording and processing user input (e.g. vocal operation commands) using speech or sounds e.g. via a microphone and outputs response using audio system such as speakers.

The navigation device 4 may be of the thin-client type, wherein the navigation device 4 does not necessarily have local navigation capabilities. In such cases, the navigation may be managed by the service center SC server(s) when there is no or limited navigation capability. Also, when devices have navigation capabilities, a navigation device can be included in the user system and can be interfaced with the in-vehicle network control means 2.

The communication means 1 enables to send and receive data between the in-vehicle components or devices and exterior components or devices, by means of communication media such as cellular, Bluetooth, Wi-Fi etc. The communication means 1 can be, for example, realized by an independent communication module like Telematics Control Unit (TCU), as well as by being attached directly to specific devices such as the HMI device. The in-vehicle network and control means 2 provides the communication line for the internal components or devices in the vehicle to communicate with other devices or components in the vehicle, e.g. according to an established automotive network communication protocol.

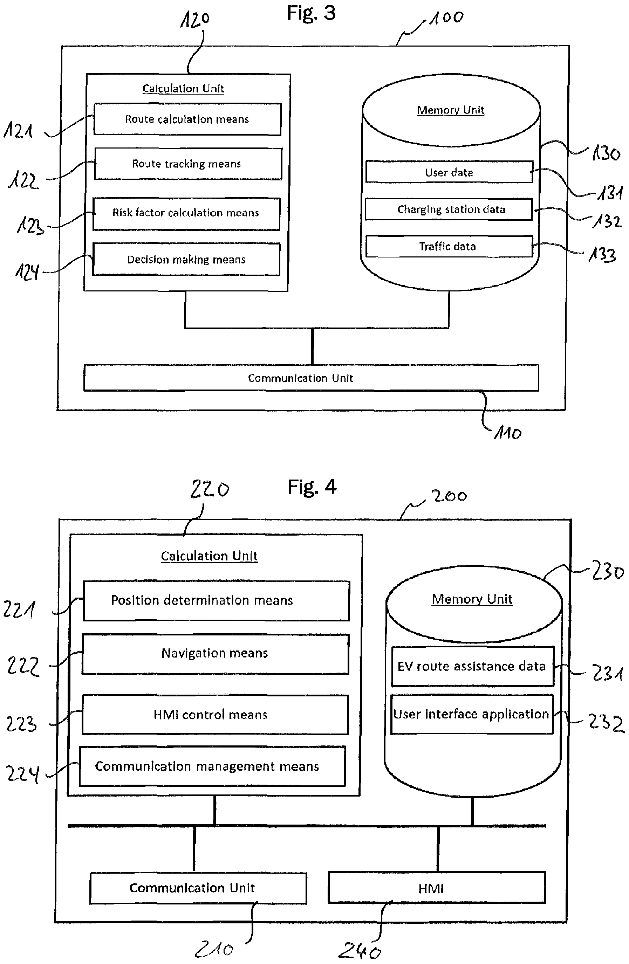

Fig. 3 illustrates an exemplary schematic view of an system/apparatus 100 (server side apparatus or system) for providing route assistance for electric vehicles EV according to an embodiment of the present invention. The apparatus 100 may be realized by a system of one or more servers and/or databases of a service center SC as described above.

The apparatus 100 comprises a communication unit 110, a calculation unit 120 (such as a processor or processing means), and a memory unit 130 for storing data. The calculation unit 120 comprises route calculation means 121, route tracking means 122, risk factor (risk parameter) calculation means 123, and decision making means 124. The memory unit 130 stores user data 131, charging station data 132 and traffic data 133.

The route calculation means 121 is configured for performing route calculation, e.g. determining a travel route based on navigation data, user data, charging station data and/or traffic data and on the basis of an input of a start location or current location of electric vehicles and a destination location. Furthermore, route calculation may involve scheduling charging at a certain charging station along the route, i.e. when calculating a route, the route calculation means 121 may already include an intended charging along the route at a pre-selected charging station which may be then indicated in the provided navigation data.

Specifically, route calculation can be performed on the basis of user's input which may include current geographic position, destination and/or direction of motion of the vehicle. The calculated route can then be used to identify the one or more charging stations that the electric vehicle may encounter along its journey corresponding to the calculated route. Multiple alternative routes may exist depending on the destination chosen by the user. The server may also suggest the best route with least amount of charging necessary (e.g. depending on the charging stations present along the route). The best route need not necessarily be the fastest or the shortest route - and at such situations, if the user desires only the shortest or fastest route, the server may provides assistance for that route chosen by the user.

The risk factor (risk parameter) calculation means 123 is configured for performing risk factor calculation for one or more of electric vehicles directly or indirectly communicably connected with the apparatus/system 100 via the communication unit 110. The apparatus 100 uses the current position of the monitored electric vehicle (referred to as ego-EV or $EV_{EGO}$ in the following) to calculate a risk factor for charging at the next intended charging station. For the risk factor calculation, the risk factor (risk parameter) calculation means 123 uses data from the charging station (indicated in the charging station data 132), the monitored electric vehicle (received from the electric vehicle) and the traffic center (indicated in the traffic data 133).

The route tracking means 122 is configured to perform route tracking for one or more electric vehicles. Route tracking may involve regularly checking or continuously monitoring of the current route travelled by the vehicle with respect to the destination position for any changes that may occur in with regard to the initially calculated route, e.g. if the user/driver voluntarily or involuntarily (e.g. due to traffic jam avoidance) needs to depart from the initially calculated route. The route tracking means may request for new route calculation and then trigger re-calculation of a risk factor for charging at the next charging station in the newly calculated alternative route. Also when the risk factor for charging may become greater than a risk threshold, the route tracking means 122 preferably triggers new route re-calculation of a new route via a different charging station.

The decision making means 124 is configured to decide on whether the monitored electric vehicle shall be re-routed via another charging station based on the risk factor calculation performed by the risk factor calculation means 124. Using the risk factor value and a set of threshold conditions, a decision to route re-calculation can be taken by the risk factor calculation means 124. The risk factor calculation means 124 can trigger the route calculation means 121 for calculating an alternative route for re-routing the electric vehicle and to informs or advises a user of the electric vehicle regarding route changes for safer destination reachability, via the communication unit 110, in particular by providing updated navigation data indicating the re-routing to the electric vehicle via the communication unit 110.

The memory unit 130 of the apparatus 100 contains information stored as user data 131, charging station data 132 and traffic data 133. User data 131 includes information on the user identification and the services provided to the user. User data 131 also may include location information, battery charge level, destination and travelling route data for an electric vehicle associated with the particular user. Charging station data 132 includes information on the location of charging stations along the route which can be used to identify the charging stations that are located along the travel route of an electric vehicle. Charging station data 132 further includes data such as number of vehicles arriving over a period of time and also the number of vehicles leaving the charging station after charging is complete. Traffic data 133 includes information on current traffic information such as speed of traffic flow, number of vehicles and the status of the route (accident, road works etc.) along the travelling direction.

The data in the memory unit 130 can be obtained on demand or may be stored prior to demand. Additionally the data also may include information on other electric vehicles travelling around the geographic area of the ego-EV.

The communication unit 110 is configured to enable the apparatus 100 to send and receive data through the connected network NTW with the other devices and systems on both wired and wireless forms and with the electric vehicles as discussed above in connection with Fig. 1.

Fig. 4 illustrates an exemplary schematic view of a mobile apparatus 200 (user side device or system) for providing route assistance for electric vehicles according to an embodiment of the present invention. The mobile apparatus 200 may be rendered by an HMI device such as HMI devices HMI1 to HMI3 according to Fig. 1. The apparatus 200 comprises a communication unit 210, a calculation unit 220, a memory unit (230) and an HMI 240. The memory unit 230 stores EV route assistance data 231 and user interface application data 232.

The EV route assistance data 231 stored in the memory unit 230 has information received from the server side, such as e.g. from apparatus 100 of Fig. 3. The EV route assistance data 231 may further contain information on route assistance information with respect to the current position of the electric vehicle EV of the apparatus 100 (i.e. the EV to which the apparatus 200 is mounted or connected) and the travelling direction thereof. The EV route assistance data 231 can be constantly updated by the server side with respect to changing traffic conditions and charging requirements of the electric vehicle. The data may further include navigation data and updated navigation data received from the server side upon a decision for re-routing of the electric vehicle.

The user interface application data 232 stored in the memory unit 230 includes data on a running application program which handles manipulation of the input from the user/driver via the HMI 240 and system output based on user's request.

The communication unit 210 is configured to enable the electric vehicle to send and receive data through the connected network NTW with the other devices and systems on both wired and wireless forms, and in particular with the service center SC server(s) such as e.g. apparatus/system 100 of Fig. 3.

The calculation unit 220 comprises position determining means 221, navigation means 222, HMI control means 223 and communication management means 224. The position determining means 221 is configured to determine a location of the apparatus 200 i.e. of the electric vehicle to which the apparatus 200 is mounted or connected. The geographical position information of the electric vehicle can be determined by a position-determining unit such as a module using a satellite navigation system such as GPS or GALILEO, or it may enable triangulation of the apparatus 200 via external positioning systems. The position determining means 221 may be integrated into the HMI device such as HMI devices HMI1 to HMI3 in Fig. 1, or it may be connected to the in-vehicle network and being accessible through the in-vehicle network and control means 2 of Fig. 2.

The navigation means 222 is configured to provide navigation services to the user/driver of the electric vehicle via the HMI 240 by using the HMI control means 223, based on navigation information (navigation data) and traffic information. The navigation means 222 can be either located within the user side (the navigation means 222 being then configured to calculate travel routes based on destination input information and map data), or at the server side (the navigation means 222 receiving navigation data indicating a pre-calculated travel route from the server side).

The HMI control means 223 provides control for user input or output using an HMI visual display or audio recognition and response method, e.g. via the audio device 5 of Fig. 2. The HMI control means 223 is also able to flexibly provide navigation assistance information to the user/driver e.g. using specific HMI setting, according to the defined service level, negotiated between user side and server side. The communication management means 224 provides control mechanisms to switch between communication interfaces that are being used to connect to the server side.

The HMI 240 is configured to act as the interface between the user/driver and the system. With the help of the HMI control means 223, the user/driver can input configuration information into the system using audio or text input and may subsequently receive a visual or audio response from the HMI 240.

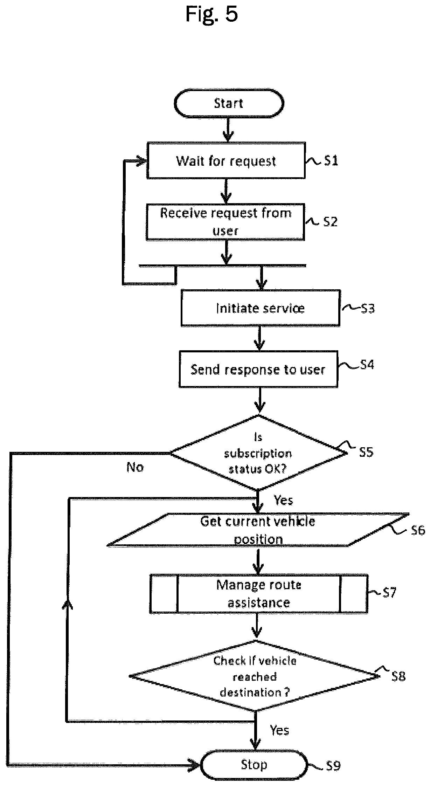

The following exemplary flowcharts in Figs. 5 to 11 illustrate exemplary processes and the sequential flow of control involved at the server side for providing route assistance to an electric vehicle user.

Fig. 5 illustrates an exemplary flowchart of a method for providing route assistance from a server side. It may, for example, be executed by an apparatus/system 100 as shown in Fig. 3.

The server -side apparatus/system waits for an activation request from one or more users (step S1; waiting state). At the reception of the activation request from a certain user (step S2), the server initiates the process (step S3) of route assistance for the user associated with the activation request (e.g. identified based on user data 131).

The activation request may contain mainly user identity and authentication data. The activation request may additionally contain a vehicle ID of an electric vehicle associated with the user, communication capability information (e.g. one vehicle can have multiple wireless interfaces) and the user HMI device information. Navigation preferences of the user may also be sent with the activation request or such preferences may be stored as a static setting mapped to the user identity at the server e.g. in the user data 131.

At step S3 the server -side apparatus/system initiates the route assistance service by checking (step S5) for user subscription to the particular service from its database (e.g. from the user data 131). If the user is not subscribed (step S5 returns NO), the server sends a negative response and then stops running the service for the user (step S9).

If the requesting user is subscribed (step S5 returns YES), the server -side apparatus/system responds positively to the user (e.g. by sending a service confirmation message), and continues with steps S6 to S9 in order to provide the route assistance service, until the user has reached the chosen destination. The destination could be a waypoint, a segment of the actual travelling route or the eventual destination of the vehicle.

In step S6, the server -side apparatus/system receives the current position of the electric vehicle of the user, the travelling direction thereof and/or the final destination. This information may be obtained, for example, in two ways, i.e. the vehicle may send travel information details during request for service provision or, after validating the subscription of the user, the server -side apparatus/system may request for such details.

Next, the route assistance management process step (step S7) is executed. The server - side apparatus/system checks for the position of the electric vehicle with respect to the destination in step S8. And, if the destination position matches with the current vehicle position, then the server -side apparatus/system stops continuing the service (step S9). If not, the process continues to execute the route assistance process (loop process of repeating steps S6 to S8) until the destination is reached (step S8 returns YES).

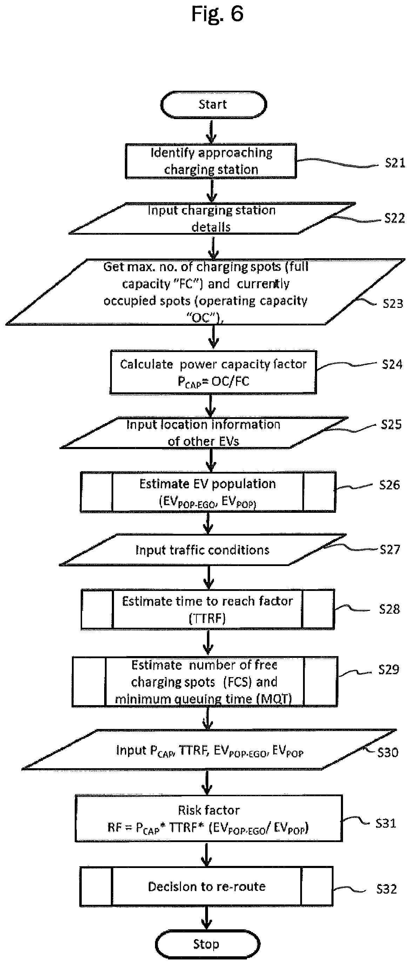

Fig. 6 illustrates an exemplary flowchart of a method for providing route assistance for electric vehicles according to an embodiment of the present invention, specifically for performing a decision to re-route on the basis of a determined risk factor. The flow chart of Fig. 6 may render a process performed in the route assistance management process step (step S7) in Fig. 5.

In step S21, a charging station (first charging station) is identified which is approached by the electric vehicle (EV$_{EGO}$). Here, the first charging station may be identified as the next charging station on the route of the electric vehicle (e.g. determined based on travel route information, charging station data and a current position and travel direction of the electric vehicle) or the charging station may be already indicated in the navigation data as a charging station that is scheduled for charging the electric vehicle according to pre-calculated travel itinerary. In any case, the identified first charging station is a charging station that is approached by the assisted electric vehicle. After step S21, the electric vehicle is associated with the identified charging station, and charging station details for the identified charging station are input (step S22).

In step S23, the server-side apparatus/system obtains charging station data on the identified charging station, e.g. directly from the identified charging station or from a charging station provider monitoring the charging station. Dynamic charging station data indicates a number of currently occupied charging spots (operating capacity, OC) and/or currently available charging spots and static charging station data indicates, besides the location of the charging station, a total number of charging spots (full capacity, FC).

Based on the information retrieved in step S23, a power capacity factor P$_{CAP}$ is calculated in step S24, the power capacity factor P$_{CAP}$ being the ratio of the number of currently occupied charging spots (operating capacity, OC) and the total number of charging spots (full capacity, FC):

$$P_{CAP} = OC/FC \qquad\qquad (1)$$

In step S25, location information of other electric vehicles (i.e. other than the currently monitored electrical vehicle) are input/obtained. Based on the information retrieved in step S25, a population of electric vehicles is estimated in step S26. Here, a total number EV$_{POP}$ of electric vehicles located in a perimeter of the identified charging station is determined.

Here, a perimeter means an area surrounding the identified charging station. The perimeter may be rendered by an area of pre-determined shape (e.g. circular shape) and/or a pre-determined size. The perimeter may be located such that the identified charging station is located in the center of a perimeter or shifted sideways. The perimeter may have a symmetrical shape or a distorted shape being distorted according to a road network topology in the vicinity of the identified charging station (e.g. stretched in directions having a higher road density).

Basically, a perimeter may have any shape or size. The size of the perimeter may also be determined on the basis of distance to neighbouring charging stations, e.g. to each side the size of the perimeter may be correspond to half the distance to the neighbouring charging station in that direction. Furthermore, perimeters of charging stations may be overlapping or not overlapping.

In addition, in step S26, a number EV$_{POP-EGO}$ of electric vehicles located in the perimeter of the identified charging station and, at the same time, traveling towards the identified charging station is determined.

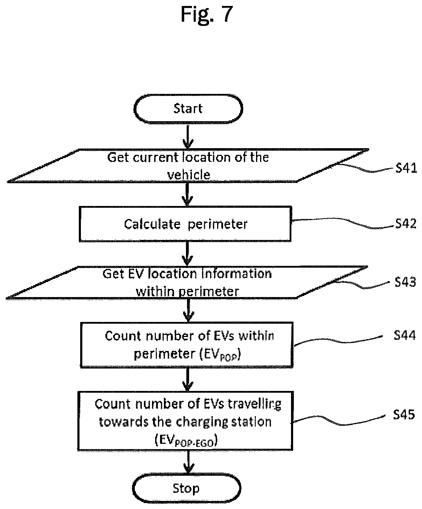

An example process of estimating the EV population in step S26 is shown in Fig. 7. Specifically, Fig. 7 illustrates an exemplary flowchart of a method for estimating a population of electric vehicles in a perimeter of a charging station in the method of Fig. 6.

The server-side apparatus/system obtains the current location of the electric vehicle (EV$_{EGO}$) and a travel direction thereof in step S41. In step S42, the perimeter of the identified charging station is obtained or calculated. In step S43, the server-side apparatus/system obtains or determines (based on location information and perimeter information) information on the number of electric vehicles that are present within the perimeter, along with their respective location and moving direction.

The server-side apparatus/system then counts/extracts the electric vehicles that are present within the perimeter and determines the total number EV$_{POP}$ of electric vehicles located in the perimeter of the identified charging station (step S44). In step S45, based on the travel direction information obtained in step S43, the server-side apparatus/system then counts/extracts the electric vehicles that are present within the perimeter and determines the total number EV$_{POP-EGO}$ of electric vehicles located in the perimeter of the identified charging station and travelling, at the same time, towards the identified charging station.

Then, the process returns to step S27 of Fig. 6. In step S27, the server-side apparatus/system obtains traffic data indicating current traffic conditions in the roads of the perimeter of the identified charging station. The traffic data may contain current traffic information of locations of vehicles, speed of the vehicles or the traffic flow and the status of the route (with respect to special circumstances such as traffic jams, accidents, road works etc.) along the travelling direction of the electric vehicle and along the travelling directions of the other electric vehicles located in the perimeter and travelling towards the identified charging station.

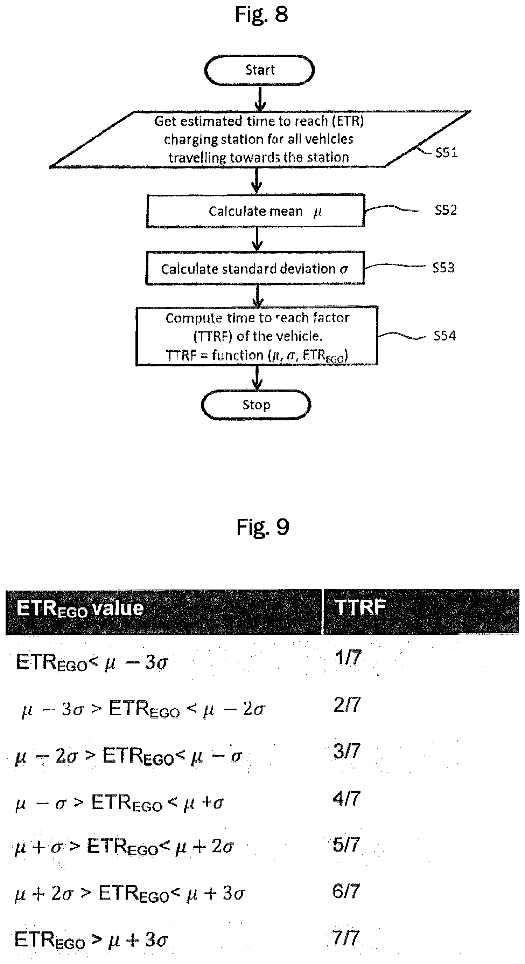

In a next step S28, a time-to-reach-factor TTRF (auxiliary parameter) is calculated. An example process for calculating the time-to-reach-factor TTRF is shown in Fig. 8. Specifically, Fig. 8 illustrates an exemplary flowchart of a method for calculating an auxiliary time-to-reach-factor in the method of Fig. 6.

The data received in step S27 (i.e. taking into account the traffic conditions) is used to calculate the instantaneous estimated travel time along a certain section of the planned route. This is equivalent to the time duration that the vehicle(s) will take to reach the identified charging station along the respective routes depending on the existing traffic conditions. Also with the input received in step S25 on the location information of other electric vehicles, the server -side apparatus/system estimates the travelling time (herein referred to as Estimated Time-to-Reach, ETR) taken by other vehicles located within the perimeter and driving towards the location of charging station (step S51).

Specifically, based on location and travelling directions, and taking into account traffic conditions, an estimated travel time ETR until estimated arrival at the identified charging station is calculated for each electric vehicle located in the perimeter of the identified charging station and travelling towards the identified charging station and the assisted electric vehicle $EV_{EGO}$.

Next, taking into account all determined estimated travel times ETR (preferably including the $ETR_{EGO}$ of the assisted electric vehicle $EV_{EGO}$) are used to calculate a mean value $\mu$ of the determined estimated travel times ETR (step S52), and in addition a standard deviation $\sigma$ from the determined mean value $\mu$ is calculated (step S53). Next, based on the estimated travel time $ETR_{EGO}$ for the assisted electric vehicle $EV_{EGO}$, the calculated mean value $\mu$ and the standard deviation $\sigma$, the time-to-reach-factor TTRF (auxiliary parameter) is calculated (step S54). The time-to-reach-factor TTRF is calculated based on a function of the estimated travel time $ETR_{EGO}$ for the assisted electric vehicle $EV_{EGO}$, the calculated mean value $\mu$ and the standard deviation $\sigma$.

Preferably, the time-to-reach-factor TTRF increases with increasing estimated travel time $ETR_{EGO}$ for the assisted electric vehicle $EV_{EGO}$. The time-to-reach-factor TTRF is a parameter indicating an estimate of a fraction of vehicles likely arriving earlier or later at the identified charging station. That is, the higher the calculated time-to-reach-factor TTRF, the higher is the estimated fraction of vehicles likely arriving earlier at the identified charging station.

The time-to-reach-factor TTRF (auxiliary parameter) can vary between 0 and 1 and can be calculated according to a cumulative distribution function for the estimated travel times ETR, or it can be calculated according to a lookup table based on a comparison of the estimated travel time $ETR_{EGO}$ for the assisted electric vehicle $EV_{EGO}$ and the calculated mean value $\mu$, taking into account the standard deviation $\sigma$.

Fig. 9 illustrates an exemplary look-up table used for calculating an auxiliary time-to-reach-factor TTRF in the method of Fig. 8. If the estimated travel time $ETR_{EGO}$ for the assisted electric vehicle $EV_{EGO}$ is estimated within one standard deviation $\sigma$ around the mean value $\mu$, the table of Fig. 9 records an intermediate time-to-reach-factor e.g. approximately 0.5 or, as in the example of Fig. 9, a value of TTRF = 4/7. If the estimated travel time $ETR_{EGO}$ for the assisted electric vehicle $EV_{EGO}$ is estimated within more than one standard deviation $\sigma$ below the mean value $\mu$, the table of Fig. 9 records lower time-to-reach-factors (TTRF = 3/7; 2/7 and 1/7) and if the estimated travel time $ETR_{EGO}$ for the assisted electric vehicle $EV_{EGO}$ is estimated within more than one standard deviation $\sigma$ above the mean value $\mu$, the table of Fig. 9 records higher time-to-reach-factors (TTRF = 5/7; 6/7 and 7/7).

In the above, for cumulative distribution functions as well as for a lookup table similar to Fig. 9, an estimated time-to-reach-factor TTRF of about 1 indicates that the assisted vehicle will likely arrive later than all other observed electric vehicles at the identified charging station, and an estimated time-to-reach-factor TTRF of about 0 indicates that the assisted vehicle $EV_{EGO}$ will likely arrive earlier than all other observed electric vehicles at the identified charging station. Intermediate values indicate that approximately half of all observed vehicles will arrive later and another half of all observed vehicles will arrive earlier than the assisted vehicle $EV_{EGO}$ at the identified charging station.

After calculating the time-to-reach-factor TTRF (auxiliary parameter) in step S29 of Fig. 6, the server -side apparatus/system determines an estimate of a number FCS of available charging spots at the time of arrival of the assisted electric vehicle $EV_{EGO}$ at the identified charging station based on the number FC - OC of currently available charging spots and the number OC of currently occupied charging spots for which the expected remaining charging duration is smaller or equal to the estimated time of arrival of the assisted electric vehicle $EV_{EGO}$ at the identified charging station. For this purpose, the charging station data for the identified charging station is further indicative of an expected remaining charging duration for each currently occupied charging spot.

Specifically, for each currently occupied charging spot, the calculated estimated travel time $ETR_{EGO}$ for the assisted electric vehicle $EV_{EGO}$ is compared with the respective remaining charging duration at that particular occupied charging spot. Based on this information, it is determined which of the currently occupied spots will likely be available upon arrival of the assisted electric vehicle $EV_{EGO}$ at the identified charging station.

Moreover, step S29 may determine, for each currently occupied charging spot for which the estimated travel time $ETR_{EGO}$ of the assisted electric vehicle $EV_{EGO}$ to the identified charging station is shorter than the respective expected remaining charging duration, a respective liberation time LT based on the expected remaining charging duration (e.g. the respective liberation time may be assumed to correspond to the expected remaining charging duration). Based on the liberation times LT and the estimated travel time $ETR_{EGO}$ of the assisted electric vehicle $EV_{EGO}$ to the identified charging station, an expected minimal queuing time MQT can be calculated based on the minimal value of the determined liberation times LT.

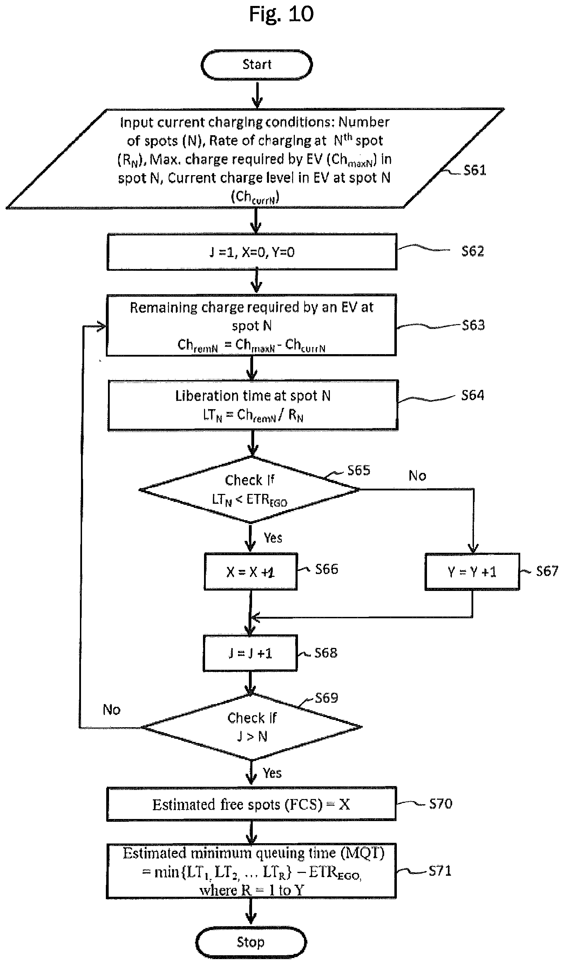

An example process for the determination of step S29 in Fig. 6 is shown in Fig. 10. Specifically, Fig. 10 illustrates an exemplary flowchart of a method for estimating a number FCS of available charging spots at a charging station and for determining one or more liberations times LT and an expected minimal queuing time MQT.

The server -side apparatus/system receives information about the number OC of occupied charging spots at the identified charging station and indicative of the estimated liberation time LT of the respective charging spots (step S61). The information may contain current charging conditions such as the number of occupied spots N, the charging rate $R_N$ of charging at the Nth spot, the maximum charge level $Ch_{maxN}$ required by the electric vehicle at the Nth charging spot (e.g. a maximum capacity of the battery of the charged electric vehicle or an intended charging target level), and the current charge level $Ch_{currN}$ in the charging electric vehicle at the Nth charging spot.

With the above information, the server -side apparatus/system calculates the liberation time $LT_N$ of the Nth spot in the charging station in steps S63 and S64. Specifically, in step S62, a remaining charging amount $Ch_{remN}$ still to be charged at the Nth charging spot is calculated as

$$Ch_{remN} = Ch_{maxN} - Ch_{currN}, \qquad (2)$$

and the respective liberation time $LT_N$ at the Nth charging spot can be calculated on the basis of the remaining charging amount $Ch_{remN}$ at the Nth charging spot and the charging rate $R_N$ of charging at the Nth spot as

$$LT_N = Ch_{remN}/R_N \qquad (3)$$

in step S64, assuming that the liberation time $LT_N$ corresponds to the expected remaining charging time at the Nth spot.

The steps S63 and S64 are performed for each of the occupied charging spots at the identified charging station. For the loop process, initial counter parameters J, X and Y are set at step S62 prior to firstly performing the steps S63 and S64. Specifically, these counter parameters are set as J = 1 and X = Y = 0.

For each determined liberation time $LT_N$, it is checked in step S65 if the respective liberation time $LT_N$ is smaller than the estimated travel time $ETR_{EGO}$ of the assisted electric vehicle $EV_{EGO}$ to the identified charging station. If step S65 returns NO, the counter parameter Y is incremented by one, and if step S65 returns YES, the counter parameter X is incremented by one (steps S66 and S67). In both cases, the counter parameter J is incremented by one. Once the liberation time $LT_N$ has been determined for each occupied charging spot (step S69 returns YES), the estimated number FCS of free charging spots at the estimated time of arrival of the assisted electric vehicle $EV_{EGO}$ at the identified charging station is determined based on the counter value X (step S70).

For all remaining charging spots which are not expected to be freed until the estimated time of arrival of the assisted electric vehicle $EV_{EGO}$ at the identified charging station, i.e. for all charging spots for which the condition of step S65 was false, the minimal value $\min\{LT_1 ...., LT_R\}$ with R = 1 to Y is determined and a minimal queuing time MQT is estimated as

$$MQT = \min\{LT_1, ...., LT_R\} - ETR_{EGO}, \qquad (4)$$

i.e. as the difference between the minimal value liberation time value $\min\{LT_1 ...., LT_R\}$ and the estimated travel time $ETR_{EGO}$ of the assisted electric vehicle $EV_{EGO}$ to the identified charging station.

Thereafter, the server -side process continues with step S30 in Fig. 6 by inputting the determined parameters including the power capacity factor $P_{CAP}$ determined in step S24, the time-to-reach factor TTRF determined in step S28 and the electric vehicle population numbers $EV_{POP}$ and $EV_{POP-EGO}$ determined in step S26. Based on the parameters, the risk factor RF for the assisted electric vehicle $EV_{EGO}$ associated with the identified charging station is determined in step S31.

Exemplarily, the risk factor RF for the assisted electric vehicle $EV_{EGO}$ associated with the identified charging station is calculated in step S31 as the product:

$$RF = P_{CAP} \cdot TTRF \cdot (EV_{POP-EGO}/EV_{EGO}) \qquad (5)$$

Continuing with step S32, the process performs a decision whether to re-route the assisted electric vehicle $EV_{EGO}$ based on the determined risk factor. For example, it can be decided to re-route the assisted electric vehicle $EV_{EGO}$ to another charging station by updating navigation data providing to the electric vehicle $EV_{EGO}$ if the determined or continuously monitored risk factor RF associated with the electric vehicle $EV_{EGO}$ and the identified charging station exceeds a threshold value.

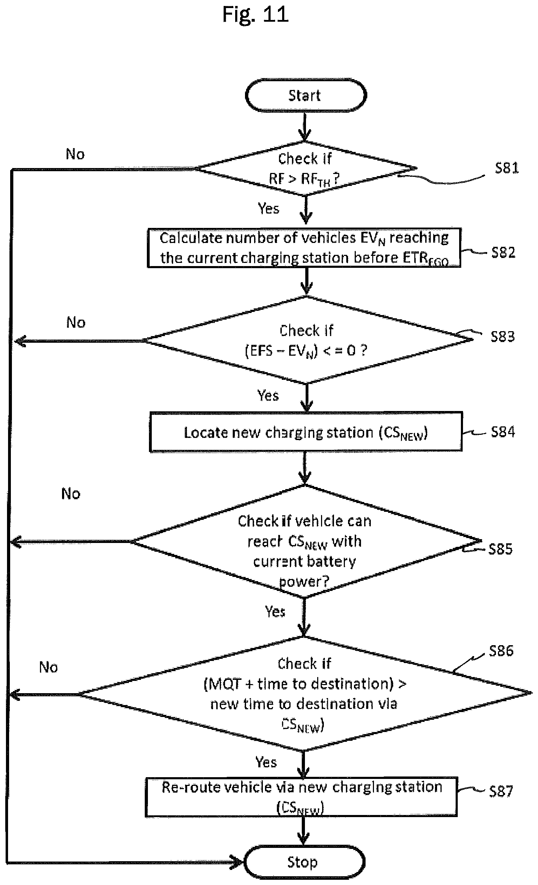

In further embodiments, the decision to re-route can be initiated once the determined or continuously monitored risk factor RF associated with the electric vehicle $EV_{EGO}$ and the identified charging station exceeds a threshold value, and the actual decision whether to re-route the assisted electric vehicle $EV_{EGO}$ or not is based on one or more further criteria as discussed below with reference to the Fig. 11.

Fig. 11 illustrates an exemplary flowchart of a method for checking plural criteria in a decision, whether to re-route the assisted electric vehicle $EV_{EGO}$, according to an embodiment of the present invention. Upon determining or monitoring the risk factor RF as mentioned above, it is determined in step S81, whether the calculated risk factor RF exceeds a predetermined threshold value $RF_{TH}$. If step S81 returns NO, the process ends and continuously monitoring or further regularly determining the risk factor RF can be continued.

The threshold $RF_{TH}$ may be a predetermined constant or, more preferably, it may be a variable number and may be dependent on the size of the charging station (i.e. number of charging spots) and/or the average number of vehicles travelling through the charging station, the time, the day, the month or season of the year.

If step S81 returns YES, a first criteria is checked in step S83, namely, whether the estimated number $EV_N$ of electric vehicles which are expected to reach the identified charging station likely before the assisted electric vehicle $EV_{EGO}$ is smaller than an expected number EFS of available charging spots (determined e.g. on the basis of the results of step S70 in Fig. 10). The number of $EV_N$ of electric vehicles which are expected to reach the identified charging station likely before the assisted electric vehicle $EV_{EGO}$ is calculated in step S82 based on the number of estimated travels times ETR being smaller than the estimated travel time $ETR_{EGO}$ for the assisted electric vehicle $EV_{EGO}$.

If step S83 returns NO, the process ends and continuously monitoring or further regularly determining the risk factor RF can be continued. However, if step S83 returns YES, upon determining another suitable charging station $CS_{NEW}$ in the neighbourhood or of an adjacent perimeter with respect to the identified charging station and determining a location thereof based on charging station data (step S84), it is checked whether the current power level of the battery of the assisted electric vehicle is sufficient for reaching the location of the new suitable charging station $CS_{NEW}$ (step S85).

If step S85 returns NO, the process ends and continuously monitoring or further regularly determining the risk factor RF can be continued. However, if step S85 returns YES, the estimated travel time of the assisted vehicle $EV_{EGO}$ to the new suitable charging station $CS_{NEW}$ is calculated and is compared with the sum of the minimal queuing time MQT determined in step S71 of Fig. 10 and the estimated travel time $ETR_{EGO}$ of the assisted electric vehicle $EV_{EGO}$ to the identified charging station determined in step S51 of Fig. 8 and it is checked whether the sum of the minimal queuing time MQT determined in step S71 of Fig. 10 and the estimated travel time $ETR_{EGO}$ of the assisted electric vehicle $EV_{EGO}$ to the identified charging station determined in step S51 is larger than the estimated travel time of the assisted vehicle $EV_{EGO}$ to the new suitable charging station $CS_{NEW}$ in step S86. In addition, or alternatively it may be checked whether the sum of the minimal queuing time MQT determined in step S71 of Fig. 10 and an estimated travel time of the assisted electric vehicle $EV_{EGO}$ to the destination via the identified charging station is larger than an estimated travel time of the assisted vehicle $EV_{EGO}$ to the destination via the new suitable charging station $CS_{NEW}$ in step S86.

If step S86 returns NO, the process ends and continuously monitoring or further regularly determining the risk factor RF can be continued. However, if step S86 returns YES, a step S87 is performed in which the electric vehicle is re-routed to the new suitable charging station $CS_{NEW}$ (i.e. a decision whether to re-route the assisted electric vehicle $EV_{EGO}$ performed in step S32 of Fig. 6 returns YES) and the electric vehicle is provided with updated navigation data indicating a new travel route to the destination via the location of the new suitable charging station $CS_{NEW}$. The user is informed of new route and the EV route assistance data is updated accordingly on the user side from the server via the communication network.

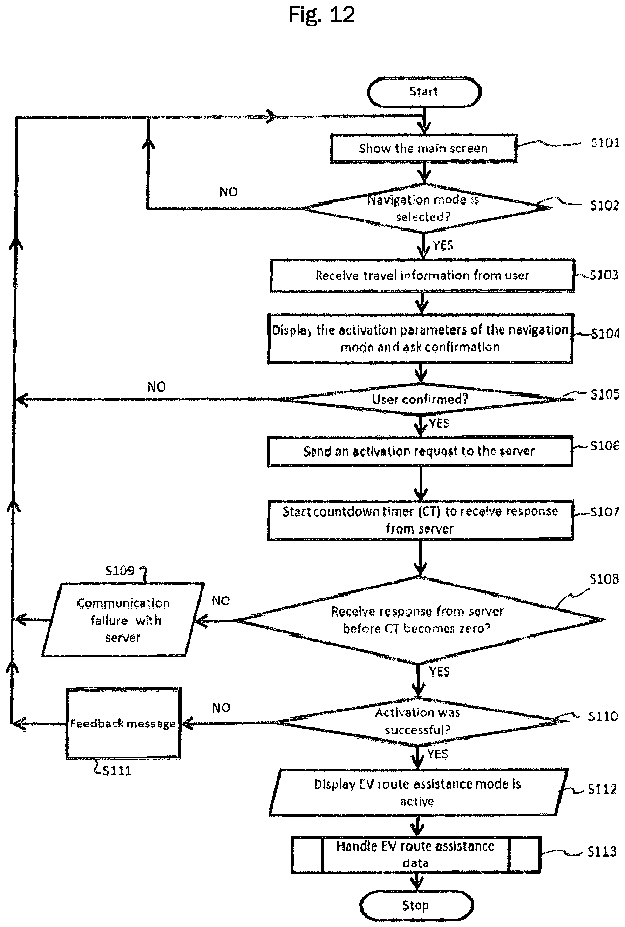

Fig. 12 illustrates an exemplary flowchart of a method for initiating route assistance for electric vehicles on a user side.

The process waits (step S101) for selection input from the user/driver, in a main screen of the HMI, in order to invoke EV route assistance. The main screen may include further driving assistance functions in addition to the EV route assistance service. A decision is made in step S102 when the driver/user selects for EV route assistance. If the driver/user wants to enable the route assistance function, then the steps from S103 to S113 are executed. If the driver/user does not want to enable the service, then the process goes again to the waiting mode of S101.

In step S103, the driver/user is requested to input travel information such as destination and optionally other waypoints such as points of interest along the travel route. A summary of the selected parameters and user confirmation is provided in step S104. When the driver/user confirms the parameters in step S105, the process sends an activation request to the server side (step S106, see also step S2 in Fig. 5) and starts running a count-down timer (S107) before which it expects a reply from the server side.

In step S108, if a response is received from the server side before timer expiry, then steps S110 till S113 are performed. If no reply is received from the server side before timer expiry, the process informs the driver that a communication failure with the server has occurred (step S111).

The received response (see step S4 of Fig. 5) from the server side is checked for successful activation by the vehicle process in step S110. If the activation response is unsuccessful (for example due to invalid user subscription to the service), the appropriate message is conveyed to the driver/user without further process. On the other hand, if the activation is successful, electric vehicle route assistance service is started (step S113).

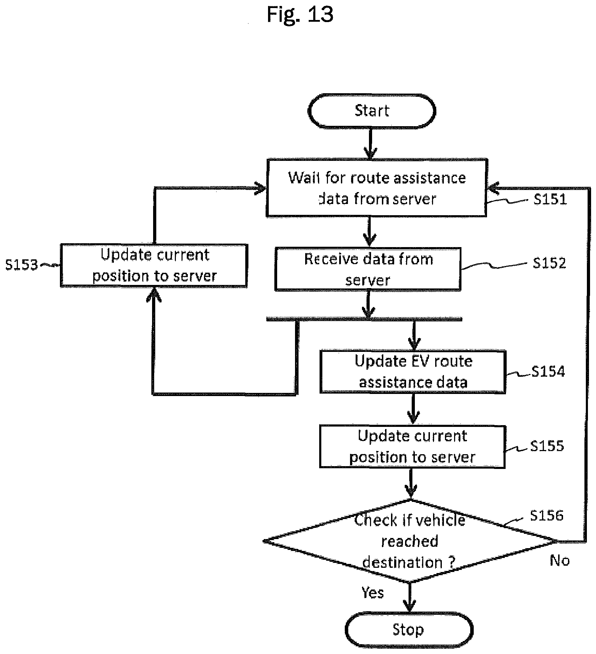

Fig. 13 illustrates an exemplary flowchart of a method for handling route assistance for electric vehicles on a user side.

The vehicle side apparatus/system (e.g. the apparatus 200 of Fig.4) waits for receiving data from the server side in step S151. When there is no data received from the server side, the process continues to wait for data and periodically updates the current position of the electric vehicle to the server side (step S153).

When data is received from the server side, the data content is analyzed and stored into the memory (e.g. memory unit 230 in Fig. 4) in step S154. Then the vehicle side apparatus/system updates the current position of the electric vehicle to the server side in step S155, and checks whether the actual position is equal to the destination information entered initially (step S156). If the destination is not reached, the process continues to wait for data from the server (step S151). If the destination is reached (step S156 returns YES), the process is stopped.

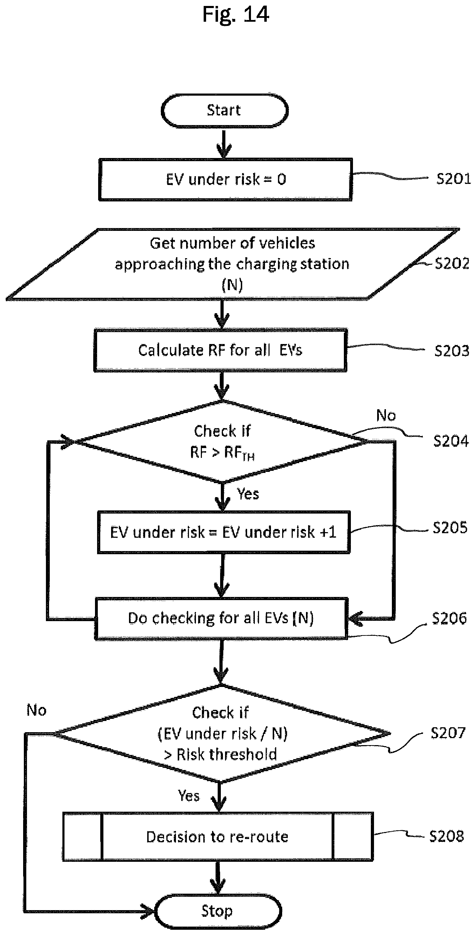

Fig. 14 illustrates an exemplary flowchart of a method for providing route assistance for electric vehicles according to an embodiment of the present invention, specifically for determining whether a certain charging station is overloaded and performing re-routing accordingly. In this exemplary embodiment, it is assumed that a risk factor is determined for a plurality of electric vehicles. Risk factor calculation for the respective electric vehicle may be performed similar to the process shown in Fig. 6 (see step S31).

In step S201, the server side apparatus/system (e.g. apparatus/system 100 of Fig. 3) initializes an "EV under risk" counter value which will be used during a decision whether to re-route one or more electric vehicles moving towards a common identified charging station, i.e. in step S201 the counter is set to 0. The server side the obtains the number of electric vehicles which are approaching the identified charging station (step S202) in a certain time period and calculates the respective risk factor for all of these electric vehicles (step S203).

For each electric vehicle, it is checked (or monitored) in step S204 whether the respective risk factor $RF$ is larger than the predetermined threshold value $RF_{TH}$. The threshold $RF_{TH}$ may be a predetermined constant or, more preferably, it may be a variable number and may be dependent on the size of the charging station (i.e. number of charging spots) and/or the average number of vehicles travelling through the charging station, the time, the day, the month or season of the year.

For each electric vehicle which has an associated risk factor $RF$ that exceeds the threshold value $RF_{TH}$, the counter "EV under risk" is incremented by one. This is performed for all risk factor monitored electric vehicles (loop process of step S206) approaching the charging station and being estimated to reach the charging station in a predetermined period of time, until the process continues with step S207.

In step S207, a ratio of the number of electric vehicles under risk (corresponding to the final counter value of the counter "EV under risk") to the total number N of electric vehicles approaching the identified charging station during the time period is calculated and this value is compared to a second threshold value (step S207). When the ratio becomes larger than the threshold (step S207 returns YES), the identified charging station is determined to be overloaded, and a decision to re-route process is initiated (step S208).

The decision to re-route process can either check for further criteria (e.g. similar to the process of Fig. 11 for one or more of the monitored vehicles) or directly re-route one or more of the monitored electric vehicles to one or more other suitable charging stations. The re-routing of electric vehicles may be performed, e.g., in one or combination of the following orders of vehicles: with increasing or decreasing order of risk factor, with increasing or decreasing order of remaining battery power, and/or with increasing or decreasing order of distance from the identified charging station.

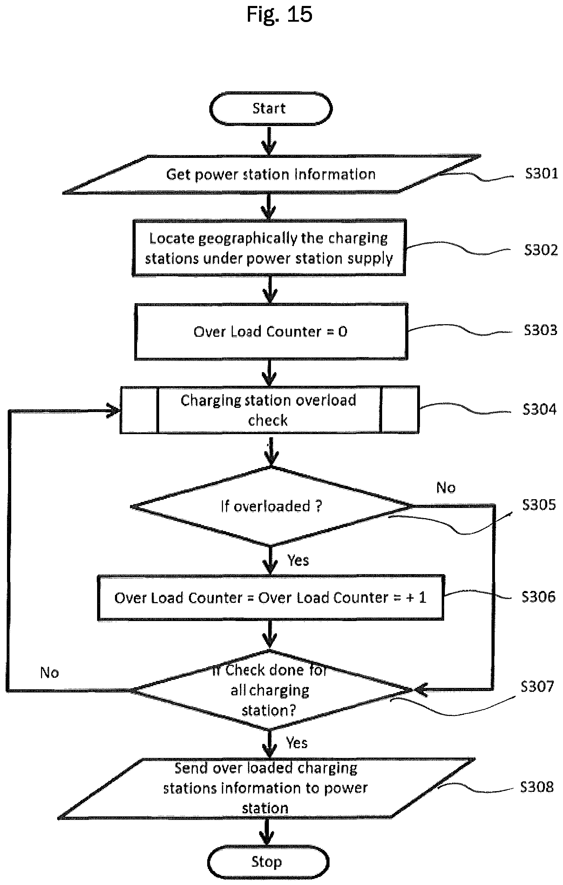

Fig. 15 illustrates an exemplary flowchart of a method for providing route assistance for electric vehicles according to an embodiment of the present invention, specifically for determining whether charging stations are overloaded and performing power management in a smart electric power grid accordingly.

In step S301, the server side apparatus/system receives information from a power station (step S301). The information may contain charging station IDs which are addresses of the charging stations. The IDs can be used by the server side to determine the geographic positions of the charging stations (step S302). The server side then initializes an overload counter and sets the overload counter to 0 (step S303). The overload counter can be used during a decision to whether to send information to the power station such as a request for re-distribution of power among charging stations.

For each charging station identified and being under the supply of the power station, a charging station overload check process is executed in step S304 (e.g. according to steps S201 to S207 of Fig. 14, see above). The overload counter is incremented by one (step S306) for each charging station that is determined to be overloaded (i.e. for each charging station for which step S207 returns YES).

When all charging stations are checked for overload (step S307 returns YES), the information on the number of overloaded charging station and location thereof is sent to the power station (step S308). The check can be made periodically by the server side or can be made at the request of the power station. Here, when a charging station is determined to be overloaded, re-distribution of electric power by means of management by the power station can be requested, supplying more electric power to the overloaded charging station and supplying less electric power to charging station which are not determined to be overloaded. Or, in case plural charging stations in an area are determined to be overloaded, re-distribution of electric power by means of management by the power station can be requested, supplying more electric power to the area of overloaded charging stations and supplying less electric power to other areas of charging stations which are not determined to be overloaded or have a less number of overloaded charging stations.

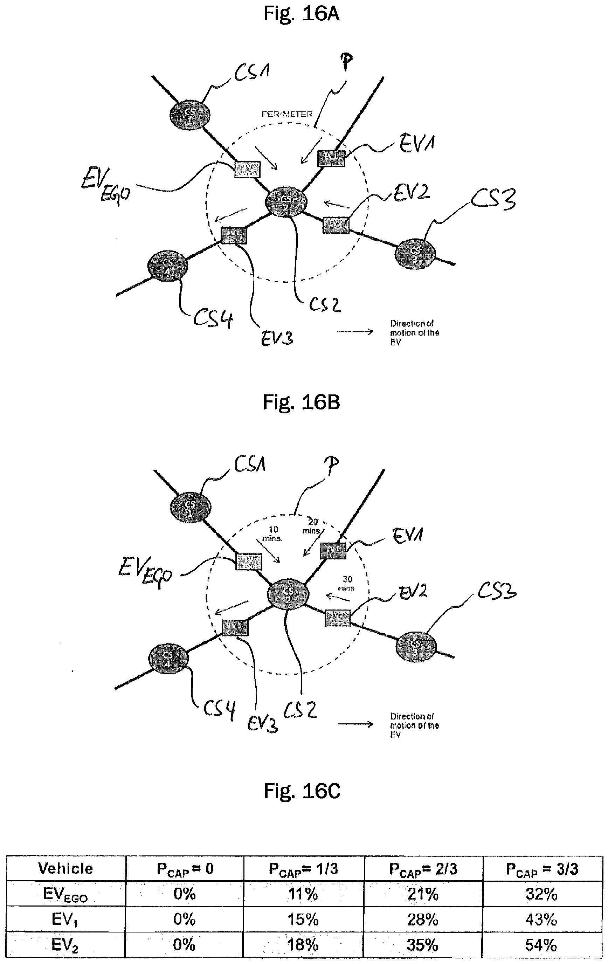

Figs. 16A to 16C illustrate an example of deciding re-routing of a certain electric vehicle according to the embodiment of Fig. 6. In the example, a charging station CS2 is identified as the charging station that is approached by the assisted electric vehicle $EV_{EGO}$ or, for the assisted electric vehicle $EV_{EGO}$, it is identified that the assisted electric vehicle $EV_{EGO}$ approaches the charging station CS2 (as an identified charging station in the sense of the above). Here, the charging station CS2 may be simply identified as the next charging station on the route of the electric vehicle $EV_{EGO}$, or user data or navigation data may indicate that the charging station CS2 is indicates in a travel itinerary route data as a charging station that is intended to be used for charging by the electric vehicle $EV_{EGO}$ or that a user's reservation has been already made for charging the electric vehicle $EV_{EGO}$ at the charging station CS2.

In the example of Fig. 6A, an exemplary circular perimeter P is determined for the charging station CS2 and, based on electric vehicle data indicating locations and travel directions of electric vehicles, the information on electric vehicles located in the perimeter P of the identified charging station CS2 are detected, and an EV population similar to steps S44 and S45 in Fig. 7 is determined. In Fig. 6A, the total number $EV_{POP}$ of electric vehicles located in the perimeter is 4 ($EV_{POP}$ = 4) because there are three other electric vehicles EV1 to EV2 located in the perimeter P in addition to the assisted electric vehicle $EV_{EGO}$.

On the other hand, as can be seen in Fig. 6B, taking into account travel directions of the electric vehicles, the number $EV_{POP\text{-}EGO}$ of electric vehicles located in the perimeter P and travelling towards the identified charging station CS2 is 3 ($EV_{POP\text{-}EGO}$ = 3) because the electric vehicle EV3 is travelling away from the identified charging station. That is, the ratio $EV_{POP\text{-}EGO}/EV_{POP}$ = 3/4, exemplarily.

Furthermore, on the basis of vehicle information indicating vehicle locations and speed and by taking into account traffic conditions, estimated travel times to the identified charging station CS2 are calculated for all of the electric vehicles EV1, EV2 and $EV_{EGO}$, i.e. ETR1 for EV1, ETR2 for EV2 and $ETR_{EGO}$ for $EV_{EGO}$ (see step S51 of Fig. 8). Here, exemplarily ETR1 = 20 mins, ETR2 = 30 mins and $ETR_{EGO}$ = 10 mins, i.e. the assisted vehicle $EV_{EGO}$ is estimated to most likely arrive earlier than both of EV1 and EV2.

In accordance with steps S52 and S53 of Fig. 8, mean value $\mu$ = 20 mins and standard deviation $\sigma$ = 8.16 mins is determined on the basis of the three ETR values 10 mins, 20 mins and 30 mins. Then, the corresponding time to reach factor TTRF is calculated based on the look-up table of Fig. 9, i.e. here TTRF = 3/7 because $\mu$ - $2\sigma$ > $ETR_{EGO}$ > $\mu$ - $\sigma$, exemplarily.

For example, assuming that the charging station CS2 has a total number FC of charging spots of three, i.e. FC =3, and assuming that two spots are currently occupied, this means that OC = 2 (see step S23 of Fig. 6).

Inputting the above determined value into equation (5) above, the risk factor RF can be exemplarily calculated as follows:

$$RF = P_{CAP} \cdot TTRF \cdot (EV_{POP\text{-}EGO}/EV_{EGO}) = 2/3 \cdot 3/7 \cdot 3/4 = 0.214$$

This may be interpreted such as that there were a risk percentage of about 21 % for the assisted vehicle $EV_{EGO}$ to charge at the identified charging station CS2 upon arrival in about 10 mins.

Fig. 16C assumes the above values for TTRF and $EV_{POP\text{-}EGO}/EV_{EGO}$ but determines the corresponding risk factors for each of the vehicles EV1, EV2 and $EV_{EGO}$ for all possible ratios $P_{CAP}$ (i.e. one, two or all three charging spots occupied).

For example, in case a threshold value would be set to 0.3, a decision whether to re-route the electric vehicle $EV_{EGO}$ to another charging station such as e.g. to one of the charging stations CS1, CS2 or CS3 would be performed only for $P_{CAP}$ = 3/3 (see step S81 of Fig. 11 above). However, if also the electric vehicles EV1 and EV2 would be actively assisted and not only passively observed for route assistance of the electric vehicle $EV_{EGO}$, a decision whether to re-route the electric vehicle EV2 to another charging station such as e.g. to one of the charging stations CS1, CS2 or CS3 would be performed already for $P_{CAP}$ = 2/3 as the risk factor for EV2 exceeds 0.3 already for $P_{CAP}$ = 2/3.

Moreover, without to or in addition to assisting single vehicles, plural vehicles or the charging station CS2 can be assisted by monitoring risk factors of plural electric vehicles based on a decision whether the charging station is to be considered as overloaded (see e.g. steps S201 to S207 of Fig. 14). For example, if a first threshold (in step S204 of Fig. 14) is set to e.g. 0.4 and the second threshold value (in step S207 of Fig. 14) is e.g. 0.6, the risk factor of two vehicles, EV1 and EV2, exceeds the first threshold so that the counter "EV under risk" (determined in steps S205 and S207 of Fig. 14) is 2 (two vehicles under risk) and since N = 3, the ratio of the counter value to the number N = 3 of vehicles approaching the charging station CS2 is determined as 2/3 which exceeds the second threshold. Accordingly, even potentially without checking further criteria, a decision to re-route may be made for at least one of the vehicles EV1 and EV2. Alternatively, it is of course possible to specify the second threshold as a number of vehicles (e.g. here as 1) and as soon as the number of vehicles under risk exceeds the threshold value, step S208 in Fig. 14 can be executed.

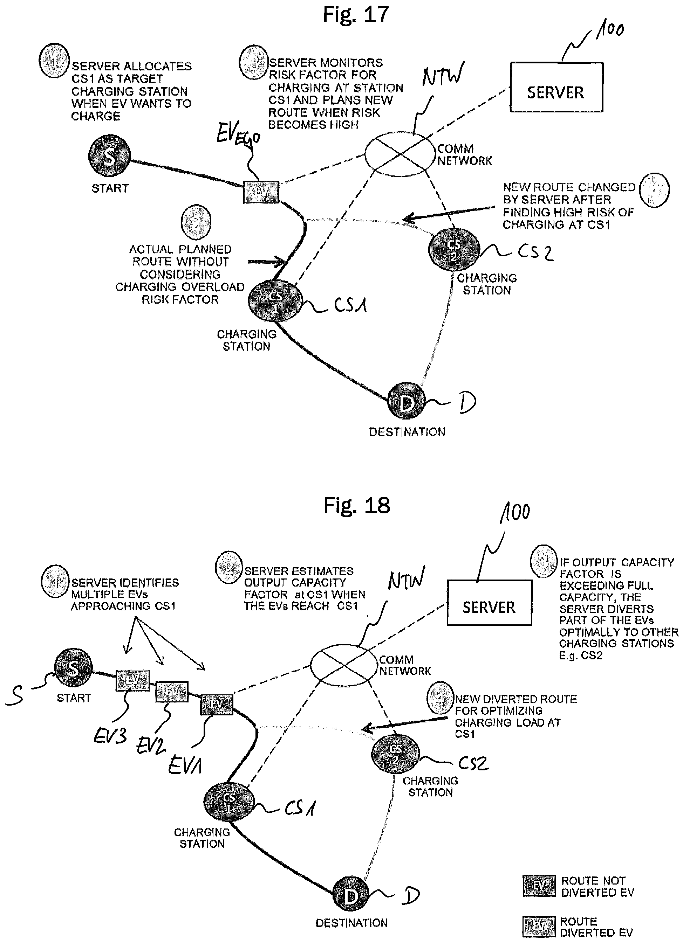

Fig. 17 illustrates an example of a first embodiment of providing route assistance for electric vehicles, comprising re-routing one certain electric vehicle according to an aspect of the invention. Here, a risk factor is monitored for electric vehicle $EV_{EGO}$ which is travelling on a current route from a start position S to a destination position D via the charging station CS1 (as an identified charging station in the sense of the above). As soon as the risk factor for the assisted electric vehicle $EV_{EGO}$ determined for the identified charging station CS1 exceeds the threshold and $EV_{EGO}$ is considered as being under risk of charging, other criteria may be additionally checked in a decision whether to re-route or the electric vehicle $EV_{EGO}$ can be directly be decided to be re-routed. Specifically, the electric vehicle $EV_{EGO}$ can be re-directed via an alternative route to the destination D via the second charging station CS2.

Fig. 18 illustrates an example of a second embodiment of providing route assistance for electric vehicles, comprising re-routing of one or more electric vehicles according to an aspect of the invention. Here, three vehicles EV1 to EV3 are continuously monitored with respect to the respective risk factor for determining whether the charging station CS1 being approached by all three electric vehicles EV1 to EV3 is to be considered as being overloaded (see e.g. Fig. 14). If the charging station is determined to be overloaded, one or more of the electric vehicles EV1 to EV3 are re-routed via the second charging station CS2.

This decision may also be executed already on a decision whether the charging station CS1 is overloaded based on an estimate of $P_{CAP}$ or the estimates number FCS of free spots at the charging station.

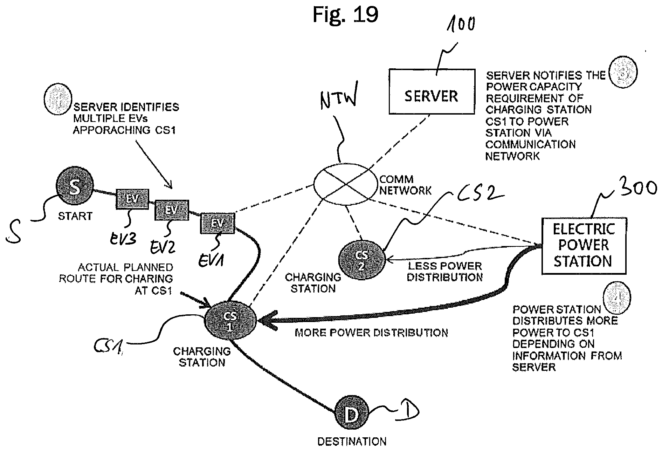

Fig. 19 illustrates an example of a third embodiment of providing route assistance for electric vehicles, comprising re-distributing electric power capacity among plural charging stations on the basis of monitoring overloading of charging stations. Here, it may be again determined whether the charging station CS1 is to be regarded as overloaded as described in one or more of the above embodiments. However, instead or in addition to deciding whether one or more electric vehicles shall be re-routed via other charging stations, a re-distribution of power supply is sent from the server side apparatus/system 100, upon detection that one or more charging stations in an area are detected to be overloaded, to the electric power station 300 for re-distribution of power among plural charging stations supplied with electric power by the electric power station 300 via a smart electric power supply grid. Then, the electric power station 300 may supply less power to the second charging station CS2 and supply more electric power to the identified charging station CS1 (first charging station).

In summary, embodiments, examples and aspects as discussed in detail above, it is advantageously possible to provide safer, smarter and more reliable route assistance to users/drivers of electric vehicles, in particular under risky conditions of charging, and especially when charging stations are susceptible to overloading and it is further desirable to aim at preventing charging stations from becoming overloaded due to continuous electric vehicle charging. It advantageously is possible by the above aspects to provide more safe, more smart and more reliable route assistance for electric vehicles and more reliable charging assistance for electric vehicles and charging stations.

**Claims**

1. Method for providing route assistance for electric vehicles, the method being performed by a system and comprising:

   - providing electric vehicle data for a plurality of electric vehicles ($EV_{EGO}$, EV1-EV3), the electric vehicle data being indicative of respective locations and travel directions of the plurality of electric vehicles ($EV_{EGO}$, EV1-EV3);
   - providing charging station data for a plurality of charging stations (CS1-CS4) indicative of respective locations of the plurality of charging stations (CS1-CS4) for electric vehicles;
   - identifying, for one or more first electric vehicles ($EV_{EGO}$; $EV_{EGO}$, EV1-EV3) of the plurality of electric vehicles ($EV_{EGO}$, EV1-EV3), a first charging station (CS1) among the plurality of charging stations (CS1-CS4) being approached by the one or more first electric vehicles ($EV_{EGO}$; $EV_{EGO}$, EV1-EV3) based on the charging station data and the electric vehicle data, or identifying, for the first charging station (CS1) of the plurality of charging stations (CS1-CS4), one or more first electric vehicles ($EV_{EGO}$; $EV_{EGO}$, EV1-EV3) of the plurality of electric vehicles ($EV_{EGO}$, EV1-EV3) approaching the first charging station (CS1);
   - estimating, for electric vehicles ($EV_{EGO}$, EV1-EV3) travelling towards the first charging station (CS1) among the plurality of electric vehicles ($EV_{EGO}$, EV1-EV3), an estimated travel time parameter ($ETR_{EGO}$, ETR1-ETR3) indicative of an estimated travel time of the respective electric vehicle to the first charging station (CS1) to determine a mean value ($\mu$) of estimated travel time parameters ($ETR_{EGO}$, ETR1-ETR3); and
   - deciding, whether to re-route one or more first electric vehicles ($EV_{EGO}$; $EV_{EGO}$, EV1-EV3) of the plurality of electric vehicles ($EV_{EGO}$, EV1-EV3) towards one or more other charging stations (CS2), in particular by providing updated navigation data, on the basis of the electric vehicle data, the charging station data, and the one or more estimated travel time parameters ($ETR_{EGO}$, ETR1-ETR3);

wherein the deciding, whether to re-route one or more first electric vehicles ($EV_{EGO}$; $EV_{EGO}$, EV1-EV3) of the plurality of electric vehicles ($EV_{EGO}$, EV1-EV3), is, for a certain electric vehicle ($EV_{EGO}$) of the one or more first electric vehicles ($EV_{EGO}$; $EV_{EGO}$, EV1-EV3) of the plurality of electric vehicles ($EV_{EGO}$, EV1-EV3), based on a comparison of the estimated travel time parameter ($ETR_{EGO}$) determined for the certain electric vehicle ($EV_{EGO}$) with the mean value ($\mu$) of estimated travel time parameters ($ETR_{EGO}$, ETR1-ETR3) of the electric vehicles ($EV_{EGO}$, EV1-EV3) travelling towards the first charging station (CS1) among the plurality of electric vehicles ($EV_{EGO}$, EV1-EV3).

2. Method according to claim 1, **characterized in that**
said deciding, whether to re-route one or more first electric vehicles ($EV_{EGO}$) of the plurality of electric vehicles ($EV_{EGO}$, EV1-EV3), is based on the electric vehicle data for the one or more first electric vehicles ($EV_{EGO}$) of the plurality of electric vehicles ($EV_{EGO}$, EV1-EV3), the electric vehicle data for one or more other electric vehicles (EV1-EV3) of the plurality of electric vehicles ($EV_{EGO}$, EV1-EV3) and the charging station data, or
said deciding, whether to re-route one or more first electric vehicles ($EV_{EGO}$, EV1-EV3) of the plurality of electric vehicles ($EV_{EGO}$, EV1-EV3), is based on the electric vehicle data for a plurality of first electric vehicles ($EV_{EGO}$) of the plurality of electric vehicles ($EV_{EGO}$, EV1-EV3) and the charging station data.

3. Method according to claim 1 or 2, **characterized by** further comprising

- determining, for the one or more first electric vehicles ($EV_{EGO}$; $EV_{EGO}$, EV1-EV3) of the plurality of electric vehicles ($EV_{EGO}$, EV1-EV3), a risk parameter (RF) indicative of an estimate of likelihood of occupancy at the first charging station (CS1) upon arrival of the respective first electric vehicle ($EV_{EGO}$; $EV_{EGO}$, EV1-EV3) of the plurality of electric vehicles ($EV_{EGO}$, EV1-EV3),

wherein said deciding, whether to re-route one or more first electric vehicles ($EV_{EGO}$, EV1-EV3) of the plurality of electric vehicles ($EV_{EGO}$, EV1-EV3), is based on the determined risk parameters (RF).

4. Method according to claim 3, **characterized by** further comprising

- determining, for each determined risk parameter (RF), whether the respective risk parameter exceeds a threshold value;

wherein said deciding, whether to re-route one or more first electric vehicles ($EV_{EGO}$, EV1-EV3) of the plurality of electric vehicles ($EV_{EGO}$, EV1-EV3), is based on a number of first electric vehicles for which the respective risk parameter (RF) exceeds the threshold value, or
wherein said deciding, whether to re-route one or more first electric vehicles ($EV_{EGO}$; $EV_{EGO}$, EV1-EV3) of the plurality of electric vehicles ($EV_{EGO}$, EV1-EV3), is, for the certain electric vehicle ($EV_{EGO}$) of the one or more first electric vehicles ($EV_{EGO}$; $EV_{EGO}$, EV1-EV3) of the plurality of electric vehicles ($EV_{EGO}$, EV1-EV3),, based on whether the risk parameter (RF) determined for the certain electric vehicle ($EV_{EGO}$) exceeds the threshold value.

5. Method according to claim 3 or 4, **characterized by** further comprising

- determining, for each determined risk parameter (RF), whether the respective risk parameter exceeds a threshold value; and
- determining a number of first electric vehicles for which the respective risk parameter (RF) exceeds the threshold value for the first charging station, and
- determining that the first charging station is overloaded if the number of first electric vehicles for which the respective risk parameter (RF) exceeds the threshold value for the first charging station exceeds a second threshold value,

wherein, if the first charging station is determined to be overloaded, one or more electric vehicles approaching the first charging station among the plurality of electric vehicles ($EV_{EGO}$, EV1-EV3) are re-routed to other charging stations, or the method further comprises requesting electric power distribution for distributing, by means of an electric power station supplying a plurality of charging stations with electric power, more electric power to the first charging station.

6. Method according to claim 3, 4 or 5, **characterized in that**
said risk parameter (RF) is determined based on at least one of:

a parameter (TTRF) indicative of a comparison of an estimated travel time of the respective first vehicle ($EV_{EGO}$) to the first charging station (CS1) and estimated travel times (ETR1-ETR3) of other electric vehicles (EV1-EV3) travelling to the first charging station (CS1) among the plurality of electric vehicles ($EV_{EGO}$, EV1-EV3),
a number (OC) of currently occupied charging spots at the first charging station (CS1) indicated in the charging station data,
a total number (FC) of charging spots at the first charging station (CS1) in the charging station data,
a number ($EV_{POP}$) of electric vehicles (EV1-EV3) of the plurality of electric vehicles ($EV_{EGO}$, EV1-EV3) located in a perimeter of the first charging station (CS1), and
a number ($EV_{EGO-POP}$) of electric vehicles (EV1-EV3) of the plurality of electric vehicles ($EV_{EGO}$, EV1-EV3) located in the perimeter of the first charging station (CS1) and travelling in the direction of the first charging station (CS1).

7. Method according to any of the preceding claims, **characterized by**

- determining, based on the charging station data for the first charging station (CS1), a perimeter region for the first charging station (CS1), the first charging station (CS1) being located in the perimeter region, in particular being centrally located in the perimeter region, and
- determining, based on the electric vehicle data for the plurality of electric vehicles ($EV_{EGO}$, EV1-EV3), which of the plurality of electric vehicles ($EV_{EGO}$, EV1-EV3) are located in the perimeter region and travelling towards the first charging station (CS1),

wherein said deciding, whether to re-route one or more first electric vehicles ($EV_{EGO}$; $EV_{EGO}$, EV1-EV3) of the plurality of electric vehicles ($EV_{EGO}$, EV1-EV3), is based on electric vehicle data for electric vehicles (EV1-EV3) located in the perimeter region and travelling towards the first charging station (CS1) among the plurality of electric vehicles ($EV_{EGO}$, EV1-EV3).

8. Method according to at least one of the preceding claims, **characterized in that**
said deciding, whether to re-route one or more first electric vehicles ($EV_{EGO}$; $EV_{EGO}$, EV1-EV3) of the plurality of electric vehicles ($EV_{EGO}$, EV1-EV3), is, for the certain electric vehicle ($EV_{EGO}$) of the one or more first electric vehicles ($EV_{EGO}$; $EV_{EGO}$, EV1-EV3) of the plurality of electric vehicles ($EV_{EGO}$, EV1-EV3), based on a comparison of the estimated travel time parameter ($ETR_{EGO}$) determined for the certain electric vehicle ($EV_{EGO}$) with the mean value ($\mu$) of estimated travel time parameters ($ETR_{EGO}$, ETR1-ETR3) on the basis of an auxiliary parameter (TTRF) being determined according to a function of the estimated travel time parameter ($ETR_{EGO}$) determined for the certain electric vehicle ($EV_{EGO}$) and the mean value ($\mu$) of estimated travel time parameters ($ETR_{EGO}$, ETR1-ETR3) or a function of the estimated travel time parameter ($ETR_{EGO}$) determined for the certain electric vehicle ($EV_{EGO}$), the mean value ($\mu$) of estimated travel time parameters ($ETR_{EGO}$, ETR1-ETR3), and a standard deviation ($\sigma$) of estimated travel time parameters ($ETR_{EGO}$, ETR1-ETR3).

9. Method according to at least one of the preceding claims, **characterized by**

- estimating a number of electric vehicles (EV1-EV3) among the plurality of electric vehicles ($EV_{EGO}$, EV1-EV3) expected to arrive at the first charging station (CS1) earlier than the certain electric vehicle ($EV_{EGO}$) of the one or more first electric vehicles ($EV_{EGO}$; $EV_{EGO}$, EV1-EV3) of the plurality of electric vehicles ($EV_{EGO}$, EV1-EV3) based on a comparison of the estimated travel time parameter ($ETR_{EGO}$) determined for the certain electric vehicle ($EV_{EGO}$) and estimated travel time parameters (ETR1-ETR3) determined for other electric vehicles (EV1-EV3) travelling towards the first charging station (CS1) among the plurality of electric vehicles ($EV_{EGO}$, EV1-EV3),

wherein said deciding, whether to re-route one or more first electric vehicles ($EV_{EGO}$; $EV_{EGO}$, EV1-EV3) of the plurality of electric vehicles ($EV_{EGO}$, EV1-EV3), is, for the certain electric vehicle ($EV_{EGO}$) of the one or more first electric vehicles ($EV_{EGO}$; $EV_{EGO}$, EV1-EV3) of the plurality of electric vehicles ($EV_{EGO}$, EV1-EV3), based on the determined number of vehicles (EV1-EV3) among the plurality of electric vehicles ($EV_{EGO}$, EV1-EV3) expected to arrive at the first charging station (CS1) earlier than the certain electric vehicle ($EV_{EGO}$).

10. Method according to any of the preceding claims, **characterized in that** the charging station data for the first charging station (CS1) is indicative of at least two of:

- a total number (FC) of charging spots at the first charging station (CS1),
- a number of currently available charging spots at the first charging station (CS1), and
- a number (OC) of currently occupied charging spots at the first charging station (CS1); and,

if at least one charging spot is occupied at the first charging station (CS1), the charging station data for the first charging station (CS1) is further indicative of an expected remaining charging duration for each currently occupied charging spot,

wherein the method further comprises:

- estimating, for the certain electric vehicle ($EV_{EGO}$) of the one or more first electric vehicles ($EV_{EGO}$; $EV_{EGO}$, EV1-EV3) of the plurality of electric vehicles ($EV_{EGO}$, EV1-EV3), a number (FCS) of available charging spots at the time of arrival of the certain electric vehicle ($EV_{EGO}$) at the first charging station (CS1) based on the number of currently available charging spots and the number of currently occupied charging spots for which the expected remaining charging duration is smaller or equal to an estimated time of arrival of the certain electric vehicle ($EV_{EGO}$) at the first charging station (CS1), or
- estimating, for the certain electric vehicle ($EV_{EGO}$) of the one or more first electric vehicles ($EV_{EGO}$; $EV_{EGO}$, EV1-EV3) of the plurality of electric vehicles ($EV_{EGO}$, EV1-EV3), whether there are any available charging spots at the time of arrival of the certain electric vehicle ($EV_{EGO}$) at the first charging station (CS1) based on the number of currently available charging spots and the number of currently occupied charging spots for which the expected remaining charging duration is smaller or equal to an estimated time of arrival of the certain electric vehicle ($EV_{EGO}$) at the first charging station (CS1), and

wherein said deciding, whether to re-route one or more first electric vehicles ($EV_{EGO}$; $EV_{EGO}$, EV1-EV3) of the plurality of electric vehicles ($EV_{EGO}$, EV1-EV3), is, for the certain electric vehicle ($EV_{EGO}$) of the one or more first electric vehicles ($EV_{EGO}$; $EV_{EGO}$, EV1-EV3) of the plurality of electric vehicles ($EV_{EGO}$, EV1-EV3), based on the estimated number (FCS) of available charging spots at the time of arrival of the certain electric vehicle ($EV_{EGO}$) at the first charging station (CS1) or on the estimate whether there are any available charging spots at the time of arrival of the certain electric vehicle ($EV_{EGO}$) at the first charging station (CS1).

11. Method according to claim 10, **characterized in that**
said estimating the number (FCS) of available charging spots at the time of arrival of the certain electric vehicle ($EV_{EGO}$) at the first charging station (CS1) or said estimating, whether there are any available charging spots at the time of arrival of the certain electric vehicle ($EV_{EGO}$) at the first charging station (CS1), is further based on the number of electric vehicles (EV1-EV3) for which the respective estimated arrival time at the first charging station (CS1) is earlier than the estimated arrival time of the certain electric vehicle ($EV_{EGO}$) at the first charging station (CS1).

12. Method according to any of the preceding claims, **characterized in that** the charging station data for the first charging station (CS1) is indicative of at least two of:

- a total number (FC) of charging spots at the first charging station (CS1),
- a number of currently available charging spots at the first charging station (CS1), and
- a number (OC) of currently occupied charging spots at the first charging station (CS1); and,

if at least one charging spot is occupied at the first charging station (CS1), the charging station data for the first charging station (CS1) is further indicative of an expected remaining charging duration for each currently occupied charging spot,

wherein the method comprises:

- determining, for each currently occupied charging spot for which an estimated travel time ($ETR_{EGO}$) of the certain electric vehicle ($EV_{EGO}$) to the first charging station (CS1) is shorter than the respective expected remaining charging duration, a respective liberation time (LT) based on the respective expected remaining charging duration and the estimated travel time ($ETR_{EGO}$) of the certain electric vehicle ($EV_{EGO}$) to the first charging station (CS1), and
- determining an expected minimal queuing time (MQT) based on the estimated travel time ($ETR_{EGO}$) of the certain electric vehicle ($EV_{EGO}$) to the first charging station (CS1) and a minimal value of the determined liberation times (LT),

wherein said deciding, whether to re-route one or more first electric vehicles ($EV_{EGO}$; $EV_{EGO}$, EV1-EV3) of the plurality of electric vehicles ($EV_{EGO}$, EV1-EV3), is, for the certain electric vehicle ($EV_{EGO}$) of the one or more first electric vehicles ($EV_{EGO}$; $EV_{EGO}$, EV1-EV3) of the plurality of electric vehicles ($EV_{EGO}$, EV1-EV3), based on the expected minimal queuing time (MQT).

13. Method according to claim 12, **characterized by**

- estimating, based on the electric vehicle data for the certain electric vehicle ($EV_{EGO}$), the charging station data for the first charging station (CS1) and the charging station data for a second charging station (CS2) of the plurality of charging stations (CS1-CS4), a first estimated travel time parameter ($ETR_{EGO}$) indicative of an estimated travel time of the certain electric vehicle ($ETR_{EGO}$) to the first charging station (CS1) and a second estimated travel time parameter ($ETR_{CS2}$) indicative of an estimated travel time of the certain electric vehicle ($ETR_{EGO}$) to the second charging station (CS2),

wherein said deciding, whether to re-route one or more first electric vehicles ($EV_{EGO}$; $EV_{EGO}$, EV1-EV3) of the plurality of electric vehicles ($EV_{EGO}$, EV1-EV3), is, for the certain electric vehicle ($EV_{EGO}$) of the one or more first electric vehicles ($EV_{EGO}$; $EV_{EGO}$, EV1-EV3) of the plurality of electric vehicles ($EV_{EGO}$, EV1-EV3), based on a comparison of the estimated travel time of the certain electric vehicle ($EV_{EGO}$) to the second charging station (CS2) and the sum of the estimated travel time of the certain electric vehicle ($EV_{EGO}$) to the first charging station (CS1) and the expected minimal queuing time (MQT) at the first charging station (CS1).

14. System for providing route assistance for electric vehicles, comprising:

- data providing means for providing electric vehicle data for a plurality of electric vehicles ($EV_{EGO}$, EV1-EV3), the electric vehicle data being indicative of respective locations and travel directions of the plurality of electric vehicles ($EV_{EGO}$, EV1-EV3), and for
providing charging station data for a plurality of charging stations (CS1-CS4) indicative of respective locations of a plurality of charging stations (CS1-CS4) for electric vehicles; and
- data processing means for identifying, for one or more first electric vehicles ($EV_{EGO}$; $EV_{EGO}$, EV1-EV3) of the plurality of electric vehicles ($EV_{EGO}$, EV1-EV3), a first charging station (CS1) among the plurality of charging stations (CS1-CS4) being approached by the one or more first electric vehicles ($EV_{EGO}$; $EV_{EGO}$, EV1-EV3) based on the charging station data and the electric vehicle data, or identifying, for the first charging station (CS1) of the plurality of charging stations (CS1-CS4), one or more first electric vehicles ($EV_{EGO}$; $EV_{EGO}$, EV1-EV3) of the plurality of electric vehicles ($EV_{EGO}$, EV1-EV3) approaching the first charging station (CS1); for estimating, for electric vehicles ($EV_{EGO}$, EV1-EV3) travelling towards the first charging station (CS1) among the plurality of electric vehicles ($EV_{EGO}$, EV1-EV3), an estimated travel time parameter ($ETR_{EGO}$, ETR1-ETR3) indicative of an estimated travel time of the respective electric vehicle to the first charging station (CS1) to determine a mean value ($\mu$) of estimated travel time parameters ($ETR_{EGO}$, ETR1-ETR3); and for deciding, whether to re-route one or more first electric vehicles ($EV_{EGO}$; $EV_{EGO}$, EV1-EV3) of the plurality of electric vehicles ($EV_{EGO}$, EV1-EV3) towards one or more other charging stations (CS2), in particular by providing updated navigation data by means of the data providing means, on the basis of the electric vehicle data, the charging station data, and the one or more estimated travel time parameters ($ETR_{EGO}$, ETR1-ETR3);

wherein the deciding, whether to re-route one or more first electric vehicles ($EV_{EGO}$; $EV_{EGO}$, EV1-EV3) of the plurality of electric vehicles ($EV_{EGO}$, EV1-EV3), is, for a certain electric vehicle ($EV_{EGO}$) of the one or more first electric vehicles ($EV_{EGO}$; $EV_{EGO}$, EV1-EV3) of the plurality of electric vehicles ($EV_{EGO}$, EV1-EV3), based on a comparison of the estimated travel time parameter ($ETR_{EGO}$) determined for the certain electric vehicle ($EV_{EGO}$) with the mean value ($\mu$) of estimated travel time parameters ($ETR_{EGO}$, ETR1-ETR3) of the electric vehicles ($EV_{EGO}$, EV1-EV3) travelling towards the first charging station (CS1) among the plurality of electric vehicles ($EV_{EGO}$, EV1-EV3).

**Patentansprüche**

1. Verfahren zum Bereitstellen einer Routenunterstützung für Elektrofahrzeuge, wobei das Verfahren durch ein System durchgeführt wird und Folgendes umfasst:

- Bereitstellen von Elektrofahrzeugdaten für mehrere Elektrofahrzeuge ($EV_{EGO}$, EV1-EV3), wobei die Elektrofahrzeugdaten jeweilige Standorte und Fahrtrichtungen der mehreren Elektrofahrzeuge ($EV_{EGO}$, EV1-EV3) angeben;

- Bereitstellen von Ladestationsdaten für mehrere Ladestationen (CS1-CS4), die jeweilige Standorte der mehreren Ladestationen (CS1-CS4) für Elektrofahrzeuge angeben;

- Identifizieren für ein oder mehrere erste Elektrofahrzeuge ($EV_{EGO}$; $EV_{EGO}$, EV1-EV3) der mehreren Elektrofahrzeuge ($EV_{EGO}$, EV1-EV3) einer ersten Ladestation (CS1) unter den mehreren Ladestationen (CS1-CS4), denen sich das eine oder die mehreren ersten Elektrofahrzeuge ($EV_{EGO}$; $EV_{EGO}$, EV1-EV3) nähern, auf der Grundlage der Ladestationsdaten und der Elektrofahrzeugdaten oder Identifizieren für die erste Ladestation (CS1) der mehreren Ladestationen (CS1-CS4) eines oder mehrerer erster Elektrofahrzeuge ($EV_{EGO}$; $EV_{EGO}$, EV1-EV3) der mehreren Elektrofahrzeuge ($EV_{EGO}$, EV1-EV3), die sich der ersten Ladestation (CS1) nähern;

- Schätzen für Elektrofahrzeuge ($EV_{EGO}$, EV1-EV3), die zur ersten Ladestation (CS1) fahren, unter den mehreren Elektrofahrzeugen ($EV_{EGO}$, EV1-EV3) eines geschätzten Fahrtzeitparameters ($ETR_{EGO}$, ETR1-ETR3), der eine geschätzte Fahrtzeit des entsprechenden Elektrofahrzeugs zur ersten Ladestation (CS1) angibt, um einen Mittelwert ($\mu$) geschätzter Fahrtzeitparameter ($ETR_{EGO}$, ETR1-ETR3) zu bestimmen; und

- Entscheiden, ob ein oder mehrere erste Elektrofahrzeuge ($EV_{EGO}$; $EV_{EGO}$, EV1-EV3) der mehreren Elektrofahrzeuge ($EV_{EGO}$, EV1-EV3) zu einer oder mehreren weiteren Ladestationen (CS2) umgeleitet werden sollen, insbesondere durch Bereitstellen aktualisierter Navigationsdaten auf der Grundlage der Elektrofahrzeugdaten, der Ladestationsdaten und des einen oder der mehreren geschätzten Fahrtzeitparameter ($ETR_{EGO}$, ETR1-ETR3); wobei

das Entscheiden, ob ein oder mehrere erste Elektrofahrzeuge ($EV_{EGO}$; $EV_{EGO}$, EV1-EV3) der mehreren Elektrofahrzeuge ($EV_{EGO}$, EV1-EV3) umgeleitet werden sollen, für ein bestimmtes Elektrofahrzeug ($EV_{EGO}$) des einen oder der mehreren ersten Elektrofahrzeuge ($EV_{EGO}$; $EV_{EGO}$, EV1-EV3) der mehreren Elektrofahrzeuge ($EV_{EGO}$, EV1-EV3) auf der Grundlage eines Vergleichs des geschätzten Fahrtzeitparameters ($ETR_{EGO}$), der für das bestimmte Elektrofahrzeug ($EV_{EGO}$) bestimmt wurde, mit dem Mittelwert ($\mu$) geschätzter Fahrtzeitparameter ($ETR_{EGO}$, ETR1-ETR3) der Elektrofahrzeuge ($EV_{EGO}$, EV1-EV3), die zur ersten Ladestation (CS1) fahren, unter den mehreren Elektrofahrzeugen ($EV_{EGO}$, EV1-EV3) erfolgt.

2. Verfahren nach Anspruch 1, **dadurch gekennzeichnet, dass**
das Entscheiden, ob ein oder mehrere erste Elektrofahrzeuge ($EV_{EGO}$) der mehreren Elektrofahrzeuge ($EV_{EGO}$, EV1-EV3) umgeleitet werden sollen, für das eine oder die mehreren ersten Elektrofahrzeuge ($EV_{EGO}$) der mehreren Elektrofahrzeuge ($EV_{EGO}$, EV1-EV3) auf der Grundlage der Elektrofahrzeugdaten für ein oder mehrere Elektrofahrzeuge (EV1-EV3) der mehreren Elektrofahrzeuge ($EV_{EGO}$, EV1-EV3) und der Ladestationsdaten erfolgt oder das Entscheiden, ob ein oder mehrere erste Elektrofahrzeuge ($EV_{EGO}$, EV1-EV3) der mehreren Elektrofahrzeuge ($EV_{EGO}$, EV1-EV3) umgeleitet werden sollen, auf der Grundlage der Elektrofahrzeugdaten für mehrere erste Elektrofahrzeuge ($EV_{EGO}$) der mehreren Elektrofahrzeuge ($EV_{EGO}$, EV1-EV3) und der Ladestationsdaten erfolgt.

3. Verfahren nach Anspruch 1 oder 2, ferner **gekennzeichnet durch**

- Bestimmen für das eine oder die mehreren ersten Elektrofahrzeuge ($EV_{EGO}$; $EV_{EGO}$, EV1-EV3) der mehreren Elektrofahrzeuge ($EV_{EGO}$, EV1-EV3) eines Risikoparameters (RF), der eine Schätzung der Wahrscheinlichkeit der Belegung bei der ersten Ladestation (CS1) nach der Ankunft des entsprechenden ersten Elektrofahrzeugs ($EV_{EGO}$; $EV_{EGO}$, EV1-EV3) der mehreren Elektrofahrzeuge ($EV_{EGO}$, EV1-EV3) angibt, wobei

das Entscheiden, ob ein oder mehrere erste Elektrofahrzeuge ($EV_{EGO}$, EV1-EV3) der mehreren Elektrofahrzeuge ($EV_{EGO}$, EV1-EV3) umgeleitet werden sollen, auf der Grundlage des Risikoparameters (RF) erfolgt.

4. Verfahren nach Anspruch 3, ferner **gekennzeichnet durch**

- Bestimmen für jeden bestimmten Risikoparameter (RF), ob der entsprechende Risikoparameter einen Schwellenwert überschreitet; wobei

das Entscheiden, ob ein oder mehrere erste Elektrofahrzeuge ($EV_{EGO}$, EV1-EV3) der mehreren Elektrofahrzeuge ($EV_{EGO}$, EV1-EV3) umgeleitet werden sollen, auf der Grundlage einer Anzahl erster Elektrofahrzeuge, für die der entsprechende Risikoparameter (RF) den Schwellenwert überschreitet, erfolgt;
das Entscheiden, ob ein oder mehrere erste Elektrofahrzeuge ($EV_{EGO}$; $EV_{EGO}$, EV1-EV3) der mehreren Elektrofahrzeuge ($EV_{EGO}$, EV1-EV3) umgeleitet werden sollen, für das bestimmte Elektrofahrzeug ($EV_{EGO}$) des einen oder der mehreren ersten Elektrofahrzeuge ($EV_{EGO}$; $EV_{EGO}$, EV1-EV3) der mehreren Elektrofahrzeuge ($EV_{EGO}$, EV1-EV3) auf der Grundlage davon erfolgt, ob der Risikoparameter (RF), der für das bestimmte Elektrofahrzeug ($EV_{EGO}$) bestimmt wurde, den Schwellenwert überschreitet.

5.  Verfahren nach Anspruch 3 oder 4, ferner **gekennzeichnet durch**

- Bestimmen für jeden bestimmten Risikoparameter (RF), ob der entsprechende Risikoparameter einen Schwellenwert überschreitet;
- Bestimmen einer Anzahl erster Elektrofahrzeuge, für die der entsprechende Risikoparameter (RF) den Schwellenwert für die erste Ladestation überschreitet, und
- Bestimmen, dass die erste Ladestation überladen ist, wenn die Anzahl erster Elektrofahrzeuge, für die der entsprechende Risikoparameter (RF) den Schwellenwert für die erste Ladestation überschreitet, eine zweiten Schwellenwert überschreitet, wobei

dann, wenn bestimmt wird, dass die erste Ladestation überladen ist, ein oder mehrere Elektrofahrzeuge, die sich der ersten Ladestation nähern, unter den mehreren Elektrofahrzeugen ($EV_{EGO}$, EV1-EV3) zu weiteren Ladestationen umgeleitet werden oder das Verfahren ferner ein Anfordern einer Verteilung elektrischer Energie zum Verteilen, mittels einer Stromversorgungsstation, die mehrere Ladestationen mit elektrischer Energie versorgt, mehr elektrischer Energie zur ersten Ladestation umfasst.

6.  Verfahren nach Anspruch 3, 4 oder 5, **dadurch gekennzeichnet, dass** der Risikoparameter (RF) auf der Grundlage von Folgendem bestimmt wird:

ein Parameter (TTRF), der einen Vergleich einer geschätzten Fahrtzeit des jeweiligen ersten Fahrzeugs ($EV_{EGO}$) zur ersten Ladestation (CS1) mit geschätzten Fahrtzeiten (ETR1-ETR3) weiterer Elektrofahrzeuge (EV1-EV3), die zur ersten Ladestation (CS1) fahren, unter den mehreren Elektrofahrzeugen ($EV_{EGO}$, EV1-EV3) angibt, eine Anzahl (OC) gegenwärtig belegter Ladestellen bei der ersten Ladestation (CS1), die in den Ladestationsdaten angegeben wird, eine Gesamtanzahl (FC) von Ladestellen bei der ersten Ladestation (CS1) in den Ladestationsdaten, eine Anzahl ($EV_{POP}$) von Elektrofahrzeugen (EV1-EV3) der mehreren Elektrofahrzeuge ($EV_{EGO}$, EV1-EV3), die sich in einem Umfang der ersten Ladestation (CS1) befinden, und eine Anzahl ($EV_{EGO-POP}$) von Elektrofahrzeugen (EV1-EV3) der mehreren Elektrofahrzeuge ($EV_{EGO}$, EV1-EV3), die sich im Umfang der ersten Ladestation (CS1) befinden und in Richtung der ersten Ladestation (CS1) fahren.

7.  Verfahren nach einem der vorhergehenden Ansprüche, **gekennzeichnet durch**

- Bestimmen auf der Grundlage der Ladestationsdaten für die erste Ladestation (CS1) eines Umfangsbereichs für die erste Ladestation (CS1), wobei sich die erste Ladestation (CS1) im Umfangsbereich befindet, sich insbesondere zentral im Umfangsbereich befindet, und
- Bestimmen auf der Grundlage der Elektrofahrzeugdaten für die mehreren Elektrofahrzeuge ($EV_{EGO}$, EV1-EV3), welche der mehreren Elektrofahrzeuge ($EV_{EGO}$, EV1-EV3) sich im Umfangsbereich befinden und zur ersten Ladestation (CS1) fahren, wobei

das Entscheiden, ob ein oder mehrere erste Elektrofahrzeuge ($EV_{EGO}$; $EV_{EGO}$, EV1-EV3) der mehreren Elektrofahrzeuge ($EV_{EGO}$, EV1-EV3) umgeleitet werden sollen, auf der Grundlage von Elektrofahrzeugdaten für Elektrofahrzeuge (EV1-EV3), die sich im Umfangsbereich befinden und zur ersten Ladestation (CS1) fahren, unter den mehreren Elektrofahrzeugen ($EV_{EGO}$, EV1-EV3) erfolgt.

8.  Verfahren nach mindestens einem der vorhergehenden Ansprüche, **dadurch gekennzeichnet, dass** das Entscheiden, ob ein oder mehrere erste Elektrofahrzeuge ($EV_{EGO}$; $EV_{EGO}$, EV1-EV3) der mehreren Elektrofahrzeuge ($EV_{EGO}$, EV1-EV3) umgeleitet werden sollen, für das bestimmte Elektrofahrzeug ($EV_{EGO}$) des einen oder der mehreren ersten Elektrofahrzeuge ($EV_{EGO}$; $EV_{EGO}$, EV1-EV3) der mehreren Elektrofahrzeuge ($EV_{EGO}$, EV1-EV3) auf der Grundlage eines Vergleichs des geschätzten Fahrtzeitparameters ($ETR_{EGO}$), der für das bestimmte Elektrofahrzeug ($EV_{EGO}$) bestimmt wurde, mit dem Mittelwert ($\mu$) geschätzter Fahrtzeitparameter ($ETR_{EGO}$, ETR1-ETR3) auf der Grundlage eines Hilfsparameters (TTRF) erfolgt, der gemäß einer Funktion des geschätzten Fahrtzeitparameters ($ETR_{EGO}$), der für das bestimmte Elektrofahrzeug ($EV_{EGO}$) bestimmt wurde, und des Mittelwerts ($\mu$) geschätzter Fahrtzeitparameter ($ETR_{EGO}$, ETR1-ETR3), oder einer Funktion des geschätzten Fahrtzeitparameters (ETR$_{EGO}$), der für das bestimmte Elektrofahrzeug (EV$_{EGO}$) bestimmt wurde, des Mittelwerts (μ) geschätzter Fahrtzeitparameter (ETR$_{EGO}$, ETR1-ETR3) und einer Standardabweichung (σ) geschätzter Fahrtzeitparameter (ETR$_{EGO}$, ETR1-ETR3) bestimmt wird.

9. Verfahren nach mindestens einem der vorhergehenden Ansprüche, **gekennzeichnet durch**

- Schätzen einer Anzahl von Elektrofahrzeugen (EV1-EV3) unter den mehreren Elektrofahrzeugen (EV$_{EGO}$, EV1-EV3), für die erwartet wird, dass sie früher bei der ersten Ladestation (CS1) eintreffen als das bestimmte Elektrofahrzeug (EV$_{EGO}$) des einen oder der mehreren ersten Elektrofahrzeuge (EV$_{EGO}$; EV$_{EGO}$, EV1-EV3) der mehreren Elektrofahrzeuge (EV$_{EGO}$, EV1-EV3), auf der Grundlage eines Vergleichs des geschätzten Fahrtzeitparameters (ETR$_{EGO}$), der für das bestimmte Elektrofahrzeug (EV$_{EGO}$) bestimmt wurde, und geschätzten Fahrtzeitparametern (ETR1-ETR3), die für weitere Elektrofahrzeuge (EV1-EV3), die zur ersten Ladestation (CS1) fahren, unter den mehreren Elektrofahrzeugen (EV$_{EGO}$, EV1-EV3) bestimmt wurden, wobei

das Entscheiden, ob ein oder mehrere erste Elektrofahrzeuge (EV$_{EGO}$; EV$_{EGO}$, EV1-EV3) der mehreren Elektrofahrzeuge (EV$_{EGO}$, EV1-EV3) umgeleitet werden sollen, für das bestimmte Elektrofahrzeug (EV$_{EGO}$) des einen oder der mehreren ersten Elektrofahrzeuge (EV$_{EGO}$; EV$_{EGO}$, EV1-EV3) der mehreren Elektrofahrzeuge (EV$_{EGO}$, EV1-EV3) auf der Grundlage der bestimmten Anzahl Elektrofahrzeuge (EV1-EV3) unter den mehreren Elektrofahrzeugen (EV$_{EGO}$, EV1-EV3), für die erwartet wird, dass sie früher als das bestimmte Elektrofahrzeug (EV$_{EGO}$) bei der ersten Ladestation (CS1) ankommen, erfolgt.

10. Verfahren nach einem der vorhergehenden Ansprüche, **dadurch gekennzeichnet, dass**
die Ladestationsdaten für die erste Ladestation (CS1) mindestens zwei der Folgenden angeben:

- eine Gesamtanzahl (FC) von Ladestellen bei der ersten Ladestation (CS1),
- eine Anzahl gegenwärtig verfügbarer Ladestellen bei der ersten Ladestation (CS1) und
- eine Anzahl (OC) gegenwärtig belegter Ladestellen bei der ersten Ladestation (CS1); und

dann, wenn mindestens eine Ladestelle bei der ersten Ladestation (CS1) belegt ist, die Ladestationsdaten für die erste Ladestation (CS1) ferner eine erwartete verbleibende Ladedauer für jede gegenwärtig belegte Ladestelle angeben, wobei
das Verfahren ferner Folgendes umfasst:

- Schätzen für das bestimmte Elektrofahrzeug (EV$_{EGO}$) des einen oder der mehreren ersten Elektrofahrzeuge (EV$_{EGO}$; EV$_{EGO}$, EV1-EV3) der mehreren Elektrofahrzeuge (EV$_{EGO}$, EV1-EV3) einer Anzahl (FCS) verfügbarer Ladestellen zur Ankunftszeit des bestimmten Elektrofahrzeugs (EV$_{EGO}$) bei der ersten Ladestation (CS1) auf der Grundlage der Anzahl gegenwärtig verfügbarer Ladestellen und der Anzahl gegenwärtig belegter Ladestellen, für die die erwartete verbleibende Ladedauer kleiner oder gleich einer geschätzten Ankunftszeit des bestimmten Elektrofahrzeug (EV$_{EGO}$) bei der ersten Ladestation (CS1) ist, oder
- Schätzen für das bestimmte Elektrofahrzeug (EV$_{EGO}$) des einen oder der mehreren ersten Elektrofahrzeuge (EV$_{EGO}$; EV$_{EGO}$, EV1-EV3) der mehreren Elektrofahrzeuge (EV$_{EGO}$, EV1-EV3), ob zur Ankunftszeit des bestimmten Elektrofahrzeugs (EV$_{EGO}$) bei der ersten Ladestation (CS1) verfügbare Ladestellen vorliegen, auf der Grundlage der Anzahl gegenwärtig verfügbarer Ladestellen und der Anzahl gegenwärtig belegter Ladestellen, für die die erwartete verbleibende Ladedauer kleiner oder gleich einer geschätzten Ankunftszeit des bestimmten Elektrofahrzeug (EV$_{EGO}$) bei der ersten Ladestation (CS1) ist, und

das Entscheiden, ob ein oder mehrere erste Elektrofahrzeuge (EV$_{EGO}$; EV$_{EGO}$, EV1-EV3) der mehreren Elektrofahrzeuge (EV$_{EGO}$, EV1-EV3) umgeleitet werden sollen, für das bestimmte Elektrofahrzeug (EV$_{EGO}$) des einen oder der mehreren ersten Elektrofahrzeuge (EV$_{EGO}$; EV$_{EGO}$, EV1-EV3) der mehreren Elektrofahrzeuge (EV$_{EGO}$, EV1-EV3) auf der Grundlage der geschätzten Anzahl (FCS) verfügbarer Ladestellen zur Ankunftszeit des bestimmten Elektrofahrzeugs (EV$_{EGO}$) bei der ersten Ladestation (CS1) oder der Schätzung, ob zur Ankunftszeit des bestimmten Elektrofahrzeugs (EV$_{EGO}$) bei der ersten Ladestation (CS1) verfügbare Ladestellen vorliegen, erfolgt.

11. Verfahren nach Anspruch 10, **dadurch gekennzeichnet, dass**
das Schätzen der Anzahl (FCS) verfügbarer Ladestellen zur Ankunftszeit des bestimmten Elektrofahrzeugs (EV$_{EGO}$) bei der ersten Ladestation (CS1) oder das Schätzen, ob zur Ankunftszeit des bestimmten Elektrofahrzeugs (EV$_{EGO}$) bei der ersten Ladestation (CS1) verfügbare Ladestellen vorliegen, ferner auf der Grundlage der Anzahl von Elektrofahrzeugen (EV1-EV3), für die die entsprechende geschätzte Ankunftszeit bei der ersten Ladestation (CS1) früher als die geschätzte Ankunftszeit des bestimmten Elektrofahrzeugs (EV$_{EGO}$) bei der ersten Ladestation (CS1) ist, erfolgt.

**12.** Verfahren nach einem der vorhergehenden Ansprüche, **dadurch gekennzeichnet, dass** die Ladestationsdaten für die erste Ladestation (CS1) mindestens zwei der Folgenden angeben:

- eine Gesamtanzahl (FC) von Ladestellen bei der ersten Ladestation (CS1),
- eine Anzahl gegenwärtig verfügbarer Ladestellen bei der ersten Ladestation (CS1) und
- eine Anzahl (OC) gegenwärtig belegter Ladestellen bei der ersten Ladestation (CS1); und

dann, wenn mindestens eine Ladestelle bei der ersten Ladestation (CS1) belegt ist, die Ladestationsdaten für die erste Ladestation (CS1) ferner eine erwartete verbleibende Ladedauer für jede gegenwärtig belegte Ladestelle angeben, wobei
das Verfahren Folgendes umfasst:

- Bestimmen für jede belegte Ladestelle, für die eine geschätzte Fahrtzeit (ETR$_{EGO}$) des bestimmten Elektrofahrzeugs (EV$_{EGO}$) zur ersten Ladestation (CS1) kürzer als die entsprechende erwartete verbleibende Ladedauer ist, einer entsprechenden Befreiungszeit (LT) auf der Grundlage der entsprechenden erwarteten verbleibenden Ladedauer und der geschätzten Fahrtzeit (ETR$_{EGO}$) des bestimmten Elektrofahrzeugs (EV$_{EGO}$) zur ersten Ladestation (CS1) und
- Bestimmen einer erwarteten Mindestwartezeit (MQT) auf der Grundlage der geschätzten Fahrtzeit (ETR$_{EGO}$) des bestimmten Elektrofahrzeugs (EV$_{EGO}$) zur ersten Ladestation (CS1) und eines Mindestwerts der bestimmten Befreiungszeiten (LT), wobei

das Entscheiden, ob ein oder mehrere erste Elektrofahrzeuge (EV$_{EGO}$; EV$_{EGO}$, EV1-EV3) der mehreren Elektrofahrzeuge (EV$_{EGO}$, EV1-EV3) umgeleitet werden sollen, für das bestimmte Elektrofahrzeug (EV$_{EGO}$) des einen oder der mehreren ersten Elektrofahrzeuge (EV$_{EGO}$; EV$_{EGO}$, EV1-EV3) der mehreren Elektrofahrzeuge (EV$_{EGO}$, EV1-EV3) auf der Grundlage der erwarteten Mindestwartezeit (MQT) erfolgt.

**13.** Verfahren nach Anspruch 12, **gekennzeichnet durch**

- Schätzen auf der Grundlage der Elektrofahrzeugdaten für das bestimmte Elektrofahrzeug (EV$_{EGO}$), der Ladestationsdaten für die erste Ladestation (CS1) und der Ladestationsdaten für eine zweite Ladestation (CS2) der mehreren Ladestationen (CS1-CS4) eines ersten geschätzten Fahrtzeitparameters (ETR$_{EGO}$), der eine geschätzte Fahrtzeit des bestimmten Elektrofahrzeugs (EV$_{EGO}$) zur ersten Ladestation (CS1) angibt, und eines zweiten geschätzten Fahrtzeitparameters (ETR$_{CS2}$), der eine geschätzte Fahrtzeit des bestimmten Elektrofahrzeugs (EV$_{EGO}$) zur zweiten Ladestation (CS2) angibt, wobei

das Entscheiden, ob ein oder mehrere erste Elektrofahrzeuge (EV$_{EGO}$; EV$_{EGO}$, EV1-EV3) der mehreren Elektrofahrzeuge (EV$_{EGO}$, EV1-EV3) umgeleitet werden sollen, für das bestimmte Elektrofahrzeug (EV$_{EGO}$) des einen oder der mehreren ersten Elektrofahrzeuge (EV$_{EGO}$; EV$_{EGO}$, EV1-EV3) der mehreren Elektrofahrzeuge (EV$_{EGO}$, EV1-EV3) auf der Grundlage eines Vergleichs der geschätzten Fahrtzeit des bestimmten Elektrofahrzeugs (EV$_{EGO}$) zur zweiten Ladestation (CS2) und der Summe der geschätzten Fahrtzeit des bestimmten Elektrofahrzeugs (EV$_{EGO}$) zur ersten Ladestation (CS1) und der erwarteten Mindestwartezeit (MQT) bei der ersten Ladestation (CS1) erfolgt.

**14.** System zum Bereitstellen einer Routenunterstützung für Elektrofahrzeuge, das Folgendes umfasst:

- Datenbereitstellungsmittel zum Bereitstellen von Elektrofahrzeugdaten für mehrere Elektrofahrzeuge (EV$_{EGO}$, EV1-EV3), wobei die Elektrofahrzeugdaten jeweilige Standorte und Fahrtrichtungen der mehreren Elektrofahrzeuge (EV$_{EGO}$, EV1-EV3) angeben; und zum
Bereitstellen von Ladestationsdaten für mehrere Ladestationen (CS1-CS4), die jeweilige Standorte mehrerer Ladestationen (CS1-CS4) für Elektrofahrzeuge angeben; und
- Datenverarbeitungsmittel zum Identifizieren für ein oder mehrere erste Elektrofahrzeuge (EV$_{EGO}$; EV$_{EGO}$, EV1-EV3) der mehreren Elektrofahrzeuge (EV$_{EGO}$, EV1-EV3) einer ersten Ladestation (CS1) unter den mehreren Ladestationen (CS1-CS4), denen sich das eine oder die mehreren ersten Elektrofahrzeuge (EV$_{EGO}$; EV$_{EGO}$, EV1-EV3) nähern, auf der Grundlage der Ladestationsdaten und der Elektrofahrzeugdaten oder Identifizieren für die erste Ladestation (CS1) der mehreren Ladestationen (CS1-CS4) eines oder mehrerer erster Elektrofahrzeuge (EV$_{EGO}$; EV$_{EGO}$, EV1-EV3) der mehreren Elektrofahrzeuge (EV$_{EGO}$, EV1-EV3), die sich der ersten Ladestation (CS1) nähern; Schätzen für Elektrofahrzeuge (EV$_{EGO}$, EV1-EV3), die zur ersten Ladestation (CS1) fahren, unter den mehreren Elektrofahrzeugen (EV$_{EGO}$, EV1-EV3) eines geschätzten Fahrtzeitparameters (ETR$_{EGO}$, ETR1-ETR3), der eine geschätzte Fahrtzeit des entsprechenden Elektrofahrzeugs zur ersten Ladestation (CS1) angibt, um einen Mittelwert ($\mu$) geschätzter Fahrtzeitparameter (ETR$_{EGO}$, ETR1-ETR3) zu bestimmen; und Entscheiden, ob ein oder mehrere erste Elektrofahrzeuge (EV$_{EGO}$; EV$_{EGO}$, EV1-EV3) der mehreren Elektrofahrzeuge (EV$_{EGO}$, EV1-EV3) zu einer oder mehreren weiteren Ladestationen (CS2) umgeleitet werden sollen, insbesondere durch Bereitstellen aktualisierter Navigationsdaten mittels der Datenbereitstellungsmittel auf der Grundlage der Elektrofahrzeugdaten, der Ladestationsdaten und des einen oder der mehreren geschätzten Fahrtzeitparameter (ETR$_{EGO}$, ETR1-ETR3); wobei

das Entscheiden, ob ein oder mehrere erste Elektrofahrzeuge (EV$_{EGO}$; EV$_{EGO}$, EV1-EV3) der mehreren Elektrofahrzeuge (EV$_{EGO}$, EV1-EV3) umgeleitet werden sollen, für ein bestimmtes Elektrofahrzeug (EV$_{EGO}$) des einen oder der mehreren ersten Elektrofahrzeuge (EV$_{EGO}$; EV$_{EGO}$, EV1-EV3) der mehreren Elektrofahrzeuge (EV$_{EGO}$, EV1-EV3) auf der Grundlage eines Vergleichs des geschätzten Fahrtzeitparameters (ETR$_{EGO}$), der für das bestimmte Elektrofahrzeug (EV$_{EGO}$) bestimmt wurde, mit dem Mittelwert ($\mu$) geschätzter Fahrtzeitparameter (ETR$_{EGO}$, ETR1-ETR3) der Elektrofahrzeuge (EV$_{EGO}$, EV1-EV3), die zur ersten Ladestation (CS1) fahren, unter den mehreren Elektrofahrzeugen (EV$_{EGO}$, EV1-EV3) erfolgt.

## Revendications

1.  Procédé pour assurer une assistance d'itinéraire pour des véhicules électriques, le procédé étant mis en œuvre par un système comprenant les étapes consistant à :

    - fournir des données de véhicule électrique pour une pluralité de véhicules électriques (EV$_{EGO}$, EV1-EV3), les données de véhicule électrique étant indicatives d'emplacements respectifs et de directions de circulation de la pluralité de véhicules électriques (20) ;
    - fournir des données de station de charge pour une pluralité de stations de charge (CS1-CS4) indicatives d'emplacements respectifs de la pluralité de station de charge (CS1-CS4) pour véhicules électriques ;
    - identifier, pour un ou plusieurs premiers véhicules électriques (EV$_{EGO}$ ; EV$_{EGO}$, EV1-EV3) de la pluralité de véhicules électriques (EV$_{EGO}$, EV1-EV3), une première station de charge (CS1) parmi la pluralité de stations de charge (CS1-CS4) qui est approchée par lesdits un ou plusieurs premiers véhicules électriques (EV$_{EGO}$, EV$_{EGO}$, EV1-EV3) sur la base des données de station de charge et des données de véhicules électriques, ou identifier, pour la première station de charge (CS1) de la pluralité de stations de charge (CS1-CS4), un ou plusieurs premiers véhicules électriques (EV$_{EGO}$, EV$_{EGO}$, EV1-EV3) de la pluralité de véhicules électriques (EV$_{EGO}$, EV5-EV3) s'approchant de la première station de charge (CS1) ;
    - estimer, pour des véhicules électriques (EV$_{EGO}$, EV1-EV3) qui circulent en direction de la première station de charge (CS) parmi la pluralité de véhicules électriques (EV$_{EGO}$, EV1-EV3), un paramètre de temps de circulation estimé (ETR$_{EGO}$, ETR1-ETR3) indicatif d'un temps de circulation estimé du véhicule électrique respectif jusqu'à la première station de charge (CS1) pour déterminer une valeur moyenne ($\mu$) des paramètres de temps de circulation estimé (ETR$_{EGO}$, ETR1-ETR3) ; et
    - décider, s'il s'agit de modifier l'itinéraire d'un ou plusieurs premiers véhicules électriques (EV$_{EGO}$ ; EV$_{EGO}$, EV1-EV3) de la pluralité de véhicules électriques (EV$_{EGO}$, EV1-EV3) en direction d'une ou plusieurs autres stations de charge (CS2), en particulier en fournissant des données de navigation mises à jour, sur la base des données de véhicule électrique, des données de station de charge, et desdits un ou plusieurs paramètres de temps de circulation estimé (ETR$_{EGO}$, ETR1-ETR3) ;

    dans lequel, la décision pour savoir s'il s'agit de modifier l'itinéraire d'un ou plusieurs premiers véhicules électriques (EV$_{EGO}$ ; EV$_{EGO}$, EV1-EV3) de la pluralité de véhicules électriques (EV$_{EGO}$, EV1-EV3), est, pour un certain véhicule électrique (EV$_{EGO}$) desdits un ou plusieurs premiers véhicules électriques (EV$_{EGO}$ ; EV$_{EGO}$, EV1-EV3) de la pluralité de véhicules électriques (EV$_{EGO}$, EV1-EV3), basée sur une comparaison du paramètre de temps de circulation estimé (ETR$_{EGO}$) déterminé pour le certain véhicule électrique (EV$_{EGO}$) avec la valeur moyenne ($\mu$) des paramètres de temps de circulation estimé (ETR$_{EGO}$, ETR1-ETR3) des véhicules électriques (EV$_{EGO}$, EV1-EV3) qui circulent en direction de la première station de charge (CS1) parmi la pluralité de véhicules électriques (EV$_{EGO}$, EV1-EV3).

2.  Procédé selon la revendication 1, **caractérisé en ce que** ladite décision pour savoir s'il s'agit de modifier l'itinéraire d'un ou plusieurs premiers véhicules électriques (EV$_{EGO}$) de la pluralité de véhicules électriques (EV$_{EGO}$, EV1-EV3), est basée sur les données de véhicule électrique pour lesdits un ou plusieurs premiers véhicules électriques (EV$_{EGO}$) de la pluralité de véhicules électriques (EV$_{EGO}$, EV1-EV3), sur les données de véhicule électrique pour un ou plusieurs autres véhicules électriques (EV5-EV3) de la pluralité de véhicules électriques (EV$_{EGO}$, EV1-EV3), et sur les données de station de charge, ou

ladite décision pour savoir s'il s'agit de modifier l'itinéraire d'un ou plusieurs premiers véhicules électriques (EV$_{EGO}$ ; EV$_{EGO}$, EV1-EV3) de la pluralité de véhicules électriques (EV$_{EGO}$, EV1-EV3), est basée sur les données de véhicule électrique pour une pluralité de premiers véhicules électriques (EV$_{EGO}$) de la pluralité de véhicules électriques (EV$_{EGO}$, EV1-EV3), et sur les données de station de charge.

3. Procédé selon la revendication 1 ou 2, **caractérisé en ce qu'**il comprend en outre

    - la détermination, pour lesdits un ou plusieurs premiers véhicules électriques (EV$_{EGO}$ ; EV$_{EGO}$, EV1-EV3) de la pluralité de véhicules électriques (EV$_{EGO}$, EV1-EV3), d'un paramètre de risque (RF) indicatif d'une estimation de probabilité d'une occupation à la première station de charge (CS1) lors de l'arrivée du premier véhicule électrique (EV$_{EGO}$ ; EV$_{EGO}$, EV1-EV3) respectif de la pluralité de véhicules électriques (EV$_{EGO}$, EV1-EV3),

dans lequel ladite décision pour savoir s'il s'agit de modifier l'itinéraire d'un ou plusieurs premiers véhicules électriques (EV$_{EGO}$ ; EV$_{EGO}$, EV1-EV3) de la pluralité de véhicules électriques (EV$_{EGO}$, EV1-EV3) est basée sur les paramètres de risque déterminer (RF).

4. Procédé selon la revendication 3, **caractérisé en ce qu'**il comprend en outre

    - la détermination, pour chaque paramètre de risque déterminé (RF) de savoir si le paramètre de risque respectif excède une valeur seuil ;

dans lequel ladite décision pour savoir s'il s'agit de modifier l'itinéraire d'un ou plusieurs véhicules électriques (EV$_{EGO}$ ; EV$_{EGO}$, EV1-EV3) de la pluralité de véhicules électriques (EV$_{EGO}$, EV1-EV3) est basée sur un nombre de premiers véhicules électriques pour lesquels le paramètre de risque respectif (RF) excède la valeur seuil, ou dans lequel ladite décision pour savoir s'il s'agit de modifier l'itinéraire d'un ou plusieurs premiers véhicules électriques (EV$_{EGO}$ ; EV$_{EGO}$, EV1-EV3) de la pluralité de véhicules électriques (EV$_{EGO}$, EV1-EV3) est, pour le certain véhicule électrique (EV$_{EGO}$) desdits un ou plusieurs premiers véhicules électriques (EV$_{EGO}$ ; EV$_{EGO}$, EV1-EV3) de la pluralité de véhicules électriques (EV$_{EGO}$, EV1-EV3), basée sur la question de savoir si le paramètre de risque (RM) déterminé pour le certain véhicule électrique (EV$_{EGO}$) excède la valeur seuil.

5. Procédé selon la revendication 3 ou 4, **caractérisé en ce qu'**il comprend en outre

    - la détermination, pour chaque paramètre de risque déterminé (RF) de savoir si le paramètre de risque respectif excède une valeur seuil ; et
    - la détermination d'un nombre de premiers véhicules électriques pour lesquels le paramètre de risque respectif (RF) excède la valeur seuil pour la première station de charge, et
    - la détermination que la première station de charge est surchargée si le nombre de premiers véhicules électriques pour lesquels le paramètre de risque respectif (RF) excède la valeur seuil pour la première station de charge excède une seconde valeur seuil,

dans lequel, s'il est déterminé que la première station de charge est surchargée, un ou plusieurs véhicules électriques s'approchant de la première station de charge parmi la pluralité de véhicules électriques (EV$_{EGO}$, EV1-EV3) sont déroutés vers d'autres stations de charge, ou le procédé comprend en outre la requête de distribution de puissance électrique afin de distribuer, au moyen d'une station de puissance électrique alimentant une pluralité de stations de charge avec une puissance électrique, plus de puissance électrique vers la première station de charge.

6. Procédé selon la revendication 3, 4 ou 5, **caractérisé en ce que** ledit paramètre de risque (RF) est déterminé sur la base de l'un au moins des éléments suivants :

    un paramètre (TTRF) indicatif d'une comparaison d'un temps de circulation estimée du premier véhicule respectif (EV$_{EGO}$) jusqu'à la première station de charge (CS1) et des temps de circulation estimés (ETR1-ETR3) d'autres véhicules électriques (EV1-EV3) circulant jusqu'à la première station de charge (CS1) parmi la pluralité de véhicules électriques (EV$_{EGO}$, EV1-EV3),
    un nombre (OC) de postes de charge actuellement occupés à la première station de charge (CS) indiqué dans les données de station de charge,

un nombre total (FC) de postes de charge à la première station de charge (CS1) dans les données de station de charge,

un nombre ($EV_{POP}$) de véhicules électriques (EV1-EV3) de la pluralité de véhicules électriques ($EV_{EGO}$, EV1-EV3) situés dans un périmètre de la première station de charge (CS1), et

un nombre ($EV_{EGO-POP}$) de véhicules électriques (EV1-EV3) de la pluralité de véhicules électriques ($EV_{EGO}$, EV1-EV3) situés dans le périmètre de la première station de charge (CS1) et circulant dans la direction de la première station de charge (CS1).

7. Procédé selon l'une quelconque des revendications précédentes, **caractérisé par**

- la détermination, sur la base des données de station de charge pour la première station de charge (CS1) d'une région de périmètre pour la première station de charge (CS1), la première station de charge (CS1) étant située dans la région de périmètre, en particulier étant située au centre de la région de périmètre, et
- la détermination, sur la base des données de véhicules électriques pour la pluralité de véhicules électriques ($EV_{EGO}$, EV1-EV3), lesquels de la pluralité de véhicules électriques ($EV_{EGO}$, EV1-EV3) sont situés dans la région de périmètre et circulant en direction de la première station de charge (CS1),

dans lequel ladite décision pour savoir s'il s'agit de modifier l'itinéraire d'un ou plusieurs premiers véhicules électriques ($EV_{EGO}$ ; $EV_{EGO}$, EV1-EV3) de la pluralité de véhicules électriques ($EV_{EGO}$, EV1-EV3), est basée sur des données de véhicule électrique ou des véhicules électriques (EV1-EV3) situés dans la région de périmètre et circulant en direction de la première station de charge (CS1) parmi la pluralité de véhicules électriques ($EV_{EGO}$, EV1-EV3).

8. Procédé selon l'une au moins des revendications précédentes, **caractérisé en ce que**
ladite décision de savoir s'il s'agit de modifier l'itinéraire d'un ou plusieurs premiers véhicules électriques ($EV_{EGO}$ ; $EV_{EGO}$, EV1-EV3) de la pluralité de véhicules électriques ($EV_{EGO}$, EV1-EV3), est, pour le certain véhicule électrique ($EV_{EGO}$) desdits un ou plusieurs premiers véhicules électriques ($EV_{EGO}$ ; $EV_{EGO}$, EV1-EV3) de la pluralité de véhicules électriques ($EV_{EGO}$, EV1-EV3), basée sur une comparaison des paramètres de temps de circulation estimés ($ETR_{EGO}$) déterminés pour le certain véhicule électrique ($EV_{EGO}$) avec la valeur moyenne ($\mu$) des paramètres de temps de circulation estimé ($ETR_{EGO}$, ETR1-ETR3) sur la base d'un paramètre auxiliaire (TTRF) qui est déterminé en accord avec une fonction de paramètre de temps de circulation estimé ($ETR_{EGO}$) déterminé pour le certain véhicule électrique ($EV_{EGO}$) et la valeur moyenne ($\mu$) des paramètres de temps de circulation estimés ($ETR_{EGO}$, ETR1-ETR3) ou une fonction du paramètre de temps de circulation estimé ($ETR_{EGO}$) déterminé pour le certain véhicule électrique ($EV_{EGO}$), la valeur moyenne ($\mu$) des paramètres de temps de circulation estimés ($ETR_{EGO}$, ETR1-ETR3), et d'une déviation standard ($\sigma$) des paramètres de temps de circulation estimés ($ETR_{EGO}$, ETR1-ETR3).

9. Procédé selon l'une au moins des revendications précédentes, **caractérisé par**

- l'estimation d'un nombre de véhicules électriques (EV1-EV3) parmi la pluralité de véhicules électriques ($EV_{EGO}$, EV1-EV3) dont il est attendu qu'ils arrivent à la première station de charge (CS1) plus tôt que le certain véhicule électrique ($EV_{EGO}$) desdits un ou plusieurs premiers véhicules électriques ($EV_{EGO}$, $EV_{EGO}$, EV1-EV3) de la pluralité de véhicules électriques ($EV_{EGO}$, EV1-EV3) sur la base d'une comparaison du paramètre de temps de circulation estimé ($ETR_{EGO}$) déterminé pour le certain véhicule électrique ($EV_{EGO}$) et des paramètres de temps de circulation estimés (ETR1-ETR3) déterminés pour d'autres véhicules électriques (EV1-EV3) qui circulent en direction de la première station de charge (CS1) parmi la pluralité de véhicules électriques ($EV_{EGO}$, EV1-EV3),

dans lequel ladite décision de savoir s'il s'agit de modifier l'itinéraire d'un ou plusieurs premiers véhicules électriques ($EV_{EGO}$, $EV_{EGO}$, EV1-EV3) de la pluralité de véhicules électriques ($EV_{EGO}$, EV1-EV3), est, pour le certain véhicule électrique ($EV_{EGO}$) desdits un ou plusieurs premiers véhicules électriques ($EV_{EGO}$, $EV_{EGO}$, EV1-EV3) de la pluralité de véhicules électriques ($EV_{EGO}$, EV1-EV3), basée sur le nombre de véhicules déterminés (EV1-EV3) parmi la pluralité de véhicules électriques ($EV_{EGO}$, EV1-EV3) dont il est attendu qu'ils arrivent à la première station de charge (CS1) plus tôt que le certain véhicule électrique ($EV_{EGO}$).

10. Procédé selon l'une quelconque des revendications précédentes, **caractérisé en ce que**
les données de station de charge pour la première station de charge (CS1) sont indicatives d'au moins deux nombres parmi :

- un nombre total (FC) de postes de charge à la première station de charge (CS1),
- un nombre de postes de charge actuellement disponibles à la première station de charge (CS1), et
- un nombre (OC) de postes de charge actuellement occupés à la première station de charge (CS) ; et

si au moins un poste de charge est occupé à la première station de charge (CS1), les données de station de charge pour la première station de charge (CS1) sont en outre indicatives d'une durée de charge restante attendue pour chaque poste de charge actuellement occupé,
dans lequel le procédé comprend en outre :

- l'estimation, pour le certain véhicule électrique ($EV_{EGO}$) desdits un ou plusieurs premiers véhicules électriques ($EV_{EGO}$, $EV_{EGO}$, EV1-EV3) de la pluralité de véhicules électriques ($EV_{EGO}$, EV1-EV3), un nombre (FCS) de postes de charge disponibles au moment de l'arrivée du certain véhicule électrique ($EV_{EGO}$) à la première station de charge (CS1) sur la base du nombre de postes de charge actuellement disponibles et du nombre de postes de charge actuellement occupés pour lesquels la durée de charge restante attendue est plus faible que ou égale à un temps d'arrivée estimé pour le certain véhicule électrique ($EV_{EGO}$) à la première station de charge (CS1), ou
- l'estimation, pour le certain véhicule électrique ($EV_{EGO}$) desdits un ou plusieurs premiers véhicules électriques ($EV_{EGO}$, $EV_{EGO}$, EV1-EV3) de la pluralité de véhicules électriques ($EV_{EGO}$, EV1-EV3), pour savoir s'il existe des quelconques postes de charge disponibles au moment de l'arrivée du certain véhicule électrique ($EV_{EGO}$) à la première station de charge (CS1) sur la base du nombre de postes de charge actuellement disponibles et du nombre de postes de charge actuellement occupés pour lesquels la durée de charge restante attendue est plus faible que ou égale à un temps d'arrivée estimé du certain véhicule électrique ($EV_{EGO}$) à la première station de charge (CS1), et

dans lequel ladite décision pour savoir s'il s'agit de modifier l'itinéraire d'un ou plusieurs véhicules électriques ($EV_{EGO}$, $EV_{EGO}$, EV1-EV3) de la pluralité de véhicules électriques ($EV_{EGO}$, EV1-EV3), est, pour le certain véhicule électrique ($EV_{EGO}$) desdits un ou plusieurs premiers véhicules électriques ($EV_{EGO}$, $EV_{EGO}$, EV1-EV3) de la pluralité de véhicules électriques ($EV_{EGO}$, EV1-EV3), basée sur le nombre estimé (FCS) de postes de charge disponibles au moment de l'arrivée du certain véhicule électrique ($EV_{EGO}$) à la première station de charge (CS1), ou sur l'estimation pour savoir s'il existe des quelconques postes de charge disponibles au moment de l'arrivée du certain véhicule électrique ($EV_{EGO}$) à la première station de charge (CS1).

11. Procédé selon la revendication 10, **caractérisé en ce que** ladite estimation du nombre (FCS) de postes de charge disponibles au moment de l'arrivée du certain véhicule électrique ($EV_{EGO}$) à la première station de charge (CS1) ou ladite estimation pour savoir s'il existe des quelconques postes de charge disponibles au moment de l'arrivée du certain véhicule électrique ($EV_{EGO}$) à la première station de charge (CS1) est en outre basé sur le nombre de véhicules électriques (EV1-EV3) pour lesquels le temps d'arrivée estimé respectif à la première station de charge (CS1) est plus tôt que le temps d'arrivée estimé du certain véhicule électrique (EVEGO) à la première station de charge (CS1).

12. Procédé selon l'une quelconque des revendications précédentes, **caractérisé en ce que**
les données de station de charge pour la première station de charge (CS1) sont indicatives d'au moins deux nombres parmi :

- un nombre total (FC) de postes de charge à la première station de charge (CS1),
- un nombre de postes de charge actuellement disponibles à la première station de charge (CS1), et
- un nombre (OC) de postes de charge actuellement occupés à la première station de charge (CS1) ; et

si au moins un poste de charge est occupé à la première station de charge (CS1), les données de station de charge pour la première station de charge (CS1) sont en outre indicatives d'une durée de charge restante attendue pour chaque poste de charge actuellement occupé,
dans lequel le procédé comprend :

- la détermination, pour chaque poste de charge actuellement occupé pour lesquels un temps de circulation estimé ($ETR_{EGO}$) du certain véhicule électrique ($EV_{EGO}$) jusqu'à la première station de charge (CS1) est plus court que la durée de charge restante attendue respective, d'un temps de libération respectif (LT) sur la base de la durée de charge restante attendue respective et du temps de circulation estimé ($ETR_{EGO}$) du certain véhicule électrique ($EV_{EGO}$) de la première station de charge (CS1), et

- la détermination d'un temps de queue minimum attendu (MQT) sur la base du temps de circulation estimé ($ETR_{EGO}$) du certain véhicule électrique ($EV_{EGO}$) jusqu'à la première station de charge (CS1) et sur une valeur minimum des temps de libération déterminés (LT),

dans lequel ladite décision de savoir s'il s'agit de modifier l'itinéraire d'un ou plusieurs premiers véhicules électriques ($EV_{EGO}$, $EV_{EGO}$, EV1-EV3) de la pluralité de véhicules électriques ($EV_{EGO}$, $EV_{EGO}$, EV1-EV3), est, pour le certain véhicule électrique ($EV_{EGO}$) desdits un ou plusieurs premiers véhicules électriques ($EV_{EGO}$, $EV_{EGO}$, EV1-EV3) de la pluralité de véhicules électriques ($EV_{EGO}$, EV1-EV3), basée sur le temps de queue minimum attendu (MQT).

**13.** Procédé selon la revendication 12, **caractérisé par**

- l'estimation, basée sur les données de véhicule électrique pour le certain véhicule électrique ($EV_{EGO}$), sur les données de station de charge pour la première station de charge (CS1) et sur les données de station de charge pour une seconde station de charge (CS2) de la pluralité de stations de charge (CS1-CS4), d'un premier paramètre de temps de circulation estimé ($ETR_{EGO}$) indicatif d'un temps de circulation estimé pour le certain véhicule électrique ($ETR_{EGO}$) jusqu'à la première station de charge (CS1) et d'un second paramètre de temps de circulation estimé ($ETR_{CS2}$) indicatif d'un temps de circulation estimé pour le certain véhicule électrique ($ETR_{EGO}$) jusqu'à la seconde station de charge (CS2),

dans lequel ladite décision pour savoir s'il s'agit de modifier l'itinéraire d'un ou plusieurs premiers véhicules électriques ($EV_{EGO}$, $EV_{EGO}$, EV1-EV3) de la pluralité de véhicules électriques ($EV_{EGO}$, EV1-EV3), est, pour le certain véhicule électrique ($EV_{EGO}$) desdits un ou plusieurs premiers véhicules électriques ($EV_{EGO}$, $EV_{EGO}$, EV1-EV3) de la pluralité de véhicules électriques ($EV_{EGO}$, $EV_{EGO}$, EV1-EV3), basée sur une comparaison du temps de circulation estimé du certain véhicule électrique (EVEGO) jusqu'à la seconde station de charge (CS2) et de la somme du temps de circulation estimé du certain véhicule électrique ($EV_{EGO}$) jusqu'à la première station de charge (CS1) et du temps de queue minimum attendu (MQT) à la première station de charge (CS1).

**14.** Système pour procurer une assistance d'itinéraire pour des véhicules électriques, comprenant :

- un moyen de fourniture de données pour fournir des données de véhicule électrique pour une pluralité de véhicules électriques ($EV_{EGO}$, EV1-EV3), les données de véhicule électrique étant indicatives d'emplacements respectifs et de direction de circulation respectives de la pluralité de véhicules électriques ($EV_{EGO}$, EV1-EV3), et pour

fournir des données de station de charge pour une pluralité de stations de charge (CS1-CS4) indicatives d'emplacements respectifs d'une pluralité de stations de charge (CS1-CS4) pour véhicules électriques ; et
un moyen de traitement de données pour identifier, pour un ou plusieurs premiers véhicules électriques ($EV_{EGO}$, $EV_{EGO}$, EV1-EV3) de la pluralité de véhicules électriques ($EV_{EGO}$, EV1-EV3), une première station de charge (CS1) parmi la pluralité de stations de charge (CS1-CS4) qui sont approchées par un ou plusieurs premiers véhicules électriques ($EV_{EGO}$ ; $EV_{EGO}$, EV1-EV3) sur la base des données de station de charge et des données de véhicules électriques, ou pour identifier, pour la première station de charge (CS1) de la pluralité de stations de charge (CS1-CS4) d'un ou plusieurs premiers véhicules électriques ($EV_{EGO}$, $EV_{EGO}$, EV1-EV3) de la pluralité de véhicules électriques ($EV_{EGO}$, $EV_{EGO}$, EV1-EV3) qui s'approchent de la première station de charge (CS1) ; pour estimer, pour des véhicules électriques ($EV_{EGO}$, EV1-EV3) qui circulent en direction de la première station de charge (CS1) parmi la pluralité de véhicules électriques ($EV_{EGO}$, EV1-EV3), un paramètre de temps de circulation estimé ($ETR_{EGO}$, ETR1-ETR3) indicatif d'un temps de circulation estimé du véhicule électrique respectif jusqu'à la première station de charge (CS1) pour déterminer une valeur moyenne ($\mu$) des paramètres de temps de circulation estimés ($ETR_{EGO}$, ETR1-ETR3) ; et pour décider pour savoir s'il s'agit de modifier l'itinéraire d'un ou plusieurs premiers véhicules électriques ($EV_{EGO}$, $EV_{EGO}$, EV1-EV3) de la pluralité de véhicules électriques ($EV_{EGO}$, EV1-EV3), vers une ou plusieurs autres stations de charge (CS2), en particulier en fournissant des données de navigation mises à jour avec les moyens du moyen de fourniture de données, sur la base des données de véhicule électrique, des données de station de charge, et desdits un ou plusieurs paramètres de temps de circulation estimés ($ETR_{EGO}$, ETR1-ETR3) ; dans lequel la décision pour savoir s'il s'agit de modifier l'itinéraire d'un ou plusieurs premiers véhicules électriques ($EV_{EGO}$, $EV_{EGO}$, EV1-EV3) de la pluralité de véhicules électriques ($EV_{EGO}$, EV1-EV3), est, pour un certain véhicule électrique (EV590) d'un ou plusieurs des premiers véhicules électriques ($EV_{EGO}$, $EV_{EGO}$, EV1-EV3) de la pluralité de véhicules électriques ($EV_{EGO}$, EV1-EV3), sur la base d'une comparaison du paramètre de temps de circulation estimé ($ETR_{EGO}$) déterminé pour le certain véhicule électrique ($EV_{EGO}$) avec la valeur moyenne ($\mu$) des paramètres de temps de circulation estimés ($ETR_{EGO}$, ETR1-ETR3) des véhicules électriques ($EV_{EGO}$, EV1-EV3) qui circulent en direction de la première station de charge (CS1) parmi la pluralité de véhicules électriques ($EV_{EGO}$, EV1-EV3).

## Fig. 1

TC

SC

PS

CS

Traffic
Center

Service
Center

Power
station

Charging
station

NTW

Wireless
gateway

Wired
Gateway

HMI3

EV

HMI
device

EV2

HMI 2

Independent
HMI device

EV

HMI
device

EV1

HMI 1

## Fig. 2

4

HMI

5

3

HMI device

Navigation device

Audio device

2

In-vehicle network and control means

1

Communication means

HMI3

Independent
HMI device

NTW

## Fig. 3

Calculation Unit

Route calculation means

Route tracking means

Risk factor calculation means

Decision making means

Memory Unit

User data

Charging station data

Traffic data

Communication Unit

## Fig. 4

Calculation Unit

Position determination means

Navigation means

HMI control means

Communication management means

Memory Unit

EV route assistance data

User interface application

Communication Unit

HMI

# Fig. 5

```
                    ┌─────────────┐
                    │    Start    │
                    └─────────────┘
                           │
                           ▼
              ┌────────────────────────┐
         ┌───▶│    Wait for request    │──── S1
         │    └────────────────────────┘
         │                │
         │                ▼
         │    ┌────────────────────────┐
         │    │  Receive request from  │──── S2
         │    │          user          │
         │    └────────────────────────┘
         │                │
         └───             ▼
              ┌────────────────────────┐
              │     Initiate service   │──── S3
              └────────────────────────┘
                           │
                           ▼
              ┌────────────────────────┐
              │   Send response to user │──── S4
              └────────────────────────┘
                           │
                           ▼
                      ╱─────────╲
          No         ╱     Is    ╲
      ┌─────────────┤ subscription ├──── S5
      │              ╲  status OK? ╱
      │               ╲─────────╱
      │                    │ Yes
      │                    ▼
      │    ┌────────────────────────┐
      │    │   Get current vehicle  │──── S6
      │    │        position        │
      │    └────────────────────────┘
      │                    │
      │                    ▼
      │  ┌──┬──────────────────┬──┐
      │  │  │   Manage route   │  │──── S7
      │  │  │    assistance    │  │
      │  └──┴──────────────────┴──┘
      │                    │
      │                    ▼
      │               ╱─────────╲
      │              ╱ Check if   ╲
      │             ┤  vehicle     ├──── S8
      │             ╲  reached     ╱
      │              ╲ destination?╱
      │               ╲─────────╱
      │                    │ Yes
      │                    ▼
      │              ┌───────────┐
      └─────────────▶│    Stop   │──── S9
                     └───────────┘
```

# Fig. 6

Start

Identify approaching charging station — S21

Input charging station details — S22

Get max. no. of charging spots (full capacity "FC") and currently occupied spots (operating capacity "OC"), — S23

Calculate power capacity factor $P_{CAP}= OC/FC$ — S24

Input location information of other EVs — S25

Estimate EV population $(EV_{POP\text{-}EGO}, EV_{POP})$ — S26

Input traffic conditions — S27

Estimate time to reach factor (TTRF) — S28

Estimate number of free charging spots (FCS) and minimum queuing time (MQT) — S29

Input $P_{CAP}$, TTRF, $EV_{POP\text{-}EGO}$, $EV_{POP}$ — S30

Risk factor $RF = P_{CAP}*\ TTRF*\ (EV_{POP\text{-}EGO}/\ EV_{POP})$ — S31

Decision to re-route — S32

Stop

# Fig. 7

```
                    ┌──────────────┐
                    │    Start     │
                    └──────┬───────┘
                           │
                           ▼
         ╱─────────────────────────────────╱
        ╱  Get current location of the      ╱──── S41
       ╱         vehicle                    ╱
      ╱─────────────────────────────────╱
                           │
                           ▼
         ┌─────────────────────────────────┐
         │      Calculate  perimeter        │──── S42
         └─────────────────┬───────────────┘
                           │
                           ▼
         ╱─────────────────────────────────╱
        ╱  Get EV location information      ╱──── S43
       ╱        within perimeter           ╱
      ╱─────────────────────────────────╱
                           │
                           ▼
         ┌─────────────────────────────────┐
         │  Count number of EVs within      │──── S44
         │     perimeter (EV_POP)           │
         └─────────────────┬───────────────┘
                           │
                           ▼
         ┌─────────────────────────────────┐
         │  Count number of EVs travelling  │──── S45
         │  towards the charging station    │
         │        (EV_POP-EGO)              │
         └─────────────────┬───────────────┘
                           │
                           ▼
                    ┌──────────────┐
                    │    Stop      │
                    └──────────────┘
```

# Fig. 8

# Fig. 9

| ETR$_{EGO}$ value | TTRF |
|---|---|
| ETR$_{EGO}$ < $\mu - 3\sigma$ | 1/7 |
| $\mu - 3\sigma$ > ETR$_{EGO}$ < $\mu - 2\sigma$ | 2/7 |
| $\mu - 2\sigma$ > ETR$_{EGO}$ < $\mu - \sigma$ | 3/7 |
| $\mu - \sigma$ > ETR$_{EGO}$ < $\mu + \sigma$ | 4/7 |
| $\mu + \sigma$ > ETR$_{EGO}$ < $\mu + 2\sigma$ | 5/7 |
| $\mu + 2\sigma$ > ETR$_{EGO}$ < $\mu + 3\sigma$ | 6/7 |
| ETR$_{EGO}$ > $\mu + 3\sigma$ | 7/7 |

# Fig. 10

Start

Input current charging conditions: Number of spots (N), Rate of charging at $N^{th}$ spot ($R_N$), Max. charge required by EV ($Ch_{maxN}$) in spot N, Current charge level in EV at spot N ($Ch_{currN}$) — S61

$J = 1, X=0, Y=0$ — S62

Remaining charge required by an EV at spot N
$Ch_{remN} = Ch_{maxN} - Ch_{currN}$ — S63

Liberation time at spot N
$LT_N = Ch_{remN} / R_N$ — S64

Check if
$LT_N < ETR_{EGO}$ — S65

No

Yes

$X = X + 1$ — S66

$Y = Y + 1$ — S67

$J = J + 1$ — S68

No

Check if
$J > N$ — S69

Yes

Estimated free spots (FCS) = X — S70

Estimated minimum queuing time (MQT)
$= \min\{LT_1, LT_2, \ldots LT_R\} - ETR_{EGO}$,
where R = 1 to Y — S71

Stop

## Fig. 11

Start

No — Check if
$RF > RF_{TH}$ ? ——— S81

Yes

Calculate number of vehicles $EV_N$ reaching
the current charging station before $ETR_{EGO}$ ——— S82

No — Check if
$(EFS - EV_N) <= 0$ ? ——— S83

Yes

Locate new charging station ($CS_{NEW}$) ——— S84

No — Check if vehicle can
reach $CS_{NEW}$ with
current battery
power? ——— S85

Yes

No — Check if
$(MQT + time\ to\ destination) >$
new time to destination via
$CS_{NEW}$) ——— S86

Yes

Re-route vehicle via new charging station
($CS_{NEW}$) ——— S87

Stop

# Fig. 12

```
                        ( Start )
                           │
                           ▼
              Show the main screen ──────────── S101
                           │
                           ▼
          NO          Navigation mode is ──────── S102
        ◄───────         selected?
                           │ YES
                           ▼
         Receive travel information from user ──── S103
                           │
                           ▼
    Display the activation parameters of the navigation ── S104
            mode and ask confirmation
                           │
                           ▼
          NO            User confirmed? ────────── S105
        ◄───────
                           │ YES
                           ▼
         Send an activation request to the server ── S106
                           │
                           ▼
    Start countdown timer (CT) to receive response ── S107
                    from server
                           │
                           ▼
   S109                                              S108
  Communication      NO    Receive response from server
  failure with   ◄──────    before CT becomes zero?
     server
                           │ YES
                           ▼
  Feedback message   NO      Activation was ──────── S110
        ◄──────              successful?
    S111                     │ YES
                             ▼
         Display EV route assistance mode is ──── S112
                    active
                           │
                           ▼
         Handle EV route assistance ──────────── S113
                    data
                           │
                           ▼
                        ( Stop )
```

# Fig. 13

```
                    ┌─────────┐
                    │  Start  │
                    └────┬────┘
                         │
                         ▼
          ┌──────────────────────────┐
          │  Wait for route assistance │──── S151
          │     data from server      │
          └──────────────┬───────────┘
                         │
                         ▼
┌──────────────────┐  ┌──────────────────┐
│ Update current   │  │ Receive data from │──── S152
│ position to server│  │      server       │
└──────────────────┘  └──────────────────┘
     S153                       │
                                ▼
                    ┌──────────────────────┐
                    │  Update EV route      │── S154
                    │  assistance data      │
                    └──────────┬───────────┘
                               │
                               ▼
                    ┌──────────────────────┐
                    │  Update current       │── S155
                    │  position to server   │
                    └──────────┬───────────┘
                               │
                               ▼
                    ╱─────────────────────╲
                   ╱  Check if vehicle      ╲── S156
                   ╲      reached           ╱
                    ╲   destination ?      ╱   No
                      ╲─────────┬────────╱
                        Yes     │
                                ▼
                          ┌─────────┐
                          │  Stop   │
                          └─────────┘
```

# Fig. 14

Start

EV under risk = 0 — S201

Get number of vehicles
approaching the charging station
(N) — S202

Calculate RF for all EVs — S203

Check if
RF > RF$_{TH}$ — S204 — No

Yes

EV under risk = EV under risk +1 — S205

Do checking for all EVs (N) — S206

Check if
(EV under risk / N)
> Risk threshold — S207

No

Yes

Decision to re-route — S208

Stop

# Fig. 15

Start

Get power station information — S301

Locate geographically the charging stations under power station supply — S302

Over Load Counter = 0 — S303

Charging station overload check — S304

If overloaded ? — S305
No
Yes

Over Load Counter = Over Load Counter = + 1 — S306

If Check done for all charging station? — S307
No
Yes

Send over loaded charging stations information to power station — S308

Stop

## Fig. 16A

## Fig. 16B

## Fig. 16C

| Vehicle | $P_{CAP} = 0$ | $P_{CAP} = 1/3$ | $P_{CAP} = 2/3$ | $P_{CAP} = 3/3$ |
|---------|---------------|-----------------|-----------------|-----------------|
| $EV_{EGO}$ | 0% | 11% | 21% | 32% |
| $EV_1$ | 0% | 15% | 28% | 43% |
| $EV_2$ | 0% | 18% | 35% | 54% |

## Fig. 17

SERVER ALLOCATES CS1 AS TARGET CHARGING STATION WHEN EV WANTS TO CHARGE

SERVER MONITORS RISK FACTOR FOR CHARGING AT STATION CS1 AND PLANS NEW ROUTE WHEN RISK BECOMES HIGH

NTW

SERVER ~ 100

EV EV0

COMM NETWORK

NEW ROUTE CHANGED BY SERVER AFTER FINDING HIGH RISK OF CHARGING AT CS1

START

S

EV

ACTUAL PLANNED ROUTE WITHOUT CONSIDERING CHARGING OVERLOAD RISK FACTOR

CS2 ~ CS 2
CHARGING STATION

CS1 ~ CS 1
CHARGING STATION

D ~ D
DESTINATION

## Fig. 18

100

SERVER IDENTIFIES MULTIPLE EVs APPROACHING CS1

SERVER ESTIMATES OUTPUT CAPACITY FACTOR at CS1 WHEN THE EVs REACH CS1

NTW

SERVER

IF OUTPUT CAPACITY FACTOR IS EXCEEDING FULL CAPACITY, THE SERVER DIVERTS PART OF THE EVs OPTIMALLY TO OTHER CHARGING STATIONS E.g. CS2

S ~ S
START

EV

EV

EV

COMM NETWORK

NEW DIVERTED ROUTE FOR OPTIMIZING CHARGING LOAD AT CS1

EV3 EV2 EV1

CS2 ~ CS2
CHARGING STATION

CS1 ~ CS1
CHARGING STATION

D ~ D
DESTINATION

EV ROUTE NOT DIVERTED EV

EV ROUTE DIVERTED EV

# Fig. 19

SERVER IDENTIFIES MULTIPLE EVs APPORACHING CS1

SERVER NOTIFIES THE POWER CAPACITY REQUIREMENT OF CHARGING STATION CS1 TO POWER STATION VIA COMMUNICATION NETWORK

SERVER

NTW

100

START

S

EV3

EV2

EV1

ACTUAL PLANNED ROUTE FOR CHARING AT CS1

CS1

CHARGING STATION

COMM NETWORK

CS2

CHARGING STATION

LESS POWER DISTRIBUTION

MORE POWER DISTRIBUTION

ELECTRIC POWER STATION

300

POWER STATION DISTRIBUTES MORE POWER TO CS1 DEPENDING ON INFORMATION FROM SERVER

DESTINATION

**EP 2 717 016 B1**

## REFERENCES CITED IN THE DESCRIPTION

**Patent documents cited in the description**

- US 20110224900 A1
- US 20110257879 A1
- US 2012098676 A1